(19)

Europäisches
Patentamt
European
Patent Office
Office européen
des brevets

(11)  **EP 2 428 766 A1**

(12)  **EUROPEAN PATENT APPLICATION**

(43) Date of publication:
14.03.2012 Bulletin 2012/11

(51) Int Cl.:
*G01B 17/00* (2006.01)    *G01N 29/22* (2006.01)
*G07D 7/08* (2006.01)

(21) Application number: **11177748.8**

(22) Date of filing: **17.08.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 10.09.2010 JP 2010203498
16.09.2010 JP 2010208489
07.03.2011 JP 2011049553

(71) Applicant: **Kabushiki Kaisha Toshiba**
**Minato-ku**
**Tokyo 105-8001 (JP)**

(72) Inventors:
• **Yamamoto, Takahiro**
**Tokyo, Tokyo (JP)**

• **Itsumi, Kazuhiro**
**Tokyo, Tokyo (JP)**
• **Ikari, Seiji**
**Tokyo, Tokyo (JP)**
• **Oonuki, Yukio**
**Tokyo, Tokyo (JP)**
• **Nemoto, Nobuki**
**Tokyo, Tokyo (JP)**
• **Mura, Junji**
**Tokyo, Tokyo (JP)**
• **Yuge, Akio**
**Tokyo, Tokyo (JP)**
• **Miki, Takeo**
**Tokyo, Tokyo (JP)**

(74) Representative: **Horn Kleimann Waitzhofer**
**Elsenheimerstrasse 65**
**80687 München (DE)**

(54)  **Ultrasonic detecting device and sheet handling apparatus comprising ultrasonic detecting device**

(57)    According to one embodiment, an ultrasonic detecting device includes a transmitter (50) arranged at a predetermined angle (θ) with respect to a conveying plane (P) on which a sheet (7) is conveyed, the transmitter (50) emitting ultrasonic waves towards the conveying plane (P); a receiver (60) provided with a plurality of channels (60a - 60h) detecting the ultrasonic waves, the receiver (60) detecting the ultrasonic waves incident on the channels; and a dividing member (70) to shield the receiver (60) from diffraction waves of the ultrasonic waves emitted from the transmitter (50), the diffraction waves being diffracted at an edge of the sheet (7) that delimits the sheet (7) in a direction perpendicular to a conveying direction of the sheet (7).

FIG. 4

**EP 2 428 766 A1**

## Description

FIELD

Exemplary embodiments described herein relate to an ultrasonic detecting device and to a sheet handling apparatus comprising an ultrasonic detecting device.

BACKGROUND

Conventionally, sheet handling apparatuses have been put into practice that count and discriminate various types of sheets, such as banknotes for example. A sheet handling apparatus takes in sheets inserted into an insert portion one by one, and conveys the sheets to an inspection device. The inspection device subjects the sheets to various sorts of processing and discriminates the state of the sheet. Based on the inspection result of the inspection device, the sheet handling apparatus sorts and stacks the sheets.

Moreover, the sheet handling apparatus may detect foreign matter, such as a tape that is stuck to the sheet. The sheet handling apparatus may judge that the sheet to which the foreign matter adheres is not fit for recirculation. For example, the inspection device may irradiate an ultrasonic wave onto the sheet, and detect the presence of foreign material, such as tape sticking to the sheet, by detecting a transmission wave.

A transmission sensor that irradiates ultrasonic waves and a reception sensor that detects the transmission waves have a sufficient scanning range in view of the dimensions of the sheet. Among the ultrasonic waves that are output by the transmission sensor, there are ultrasonic waves that are diffracted at the edges of the sheet. There is the possibility that the ultrasonic waves diffracted at the edges of the sheet (diffraction waves) are incident at positions where the reception sensor faces the sheet. As a result, there is the problem that it is difficult to detect edges of the sheet.

Moreover, with a detection method using ultrasonic waves, to detect a hole in the inspected object, ultrasonic waves that pass directly through the hole have a high intensity and tend to be diffracted. For this reason, the transmission waves are detected not only by a reception sensor at the position of the hole, but diffraction waves with comparatively high intensity are also received by neighboring reception sensors, and the size of the hole may be determined incorrectly.

SUMMARY OF THE INVENTION

It is thus an object of the present invention to provide an ultrasonic detecting device as well as a sheet handling apparatus comprising an ultrasonic detecting device that can perform an inspection with higher precision. An ultrasonic detecting device to attain this object is recited in claim 1. Further developments of this ultrasonic detecting device are recited in the dependent claims.

BRIEF DESCRIPTION OF THE DRAWINGS

FIG. 1 is a perspective view showing the outer appearance of a sheet handling apparatus in accordance with a first embodiment;
FIG. 2 is a diagrammatic view illustrating a configuration example of the sheet handling apparatus according to the first embodiment;
FIG. 3 is a block diagram illustrating a configuration example of a control system of the sheet handling apparatus according to the first embodiment;
FIG. 4 is a diagram illustrating a configuration example of the ultrasonic detecting device according to the first embodiment;
FIG. 5 is a perspective view illustrating a configuration example of an ultrasonic detecting device according to the first embodiment;
FIG. 6 is a perspective view illustrating a configuration example of an ultrasonic detecting device according to the first embodiment;
FIG. 7 is a perspective view illustrating a configuration example of an ultrasonic detecting device according to the first embodiment;
FIG. 8 is a perspective view illustrating a configuration example of an ultrasonic detecting device according to the first embodiment;
FIG. 9 is a schematic front view illustrating a configuration example of an ultrasonic detecting device according to the first embodiment;
FIG. 10 is a schematic cross-sectional view illustrating a configuration example of an ultrasonic detecting device according to the first embodiment;
FIG. 11 is a schematic cross-sectional view illustrating a configuration example of an ultrasonic detecting device according to the first embodiment;
FIG. 12 is a schematic front view illustrating a configuration example of an ultrasonic detecting device according to the first embodiment;
FIG. 13 is a schematic cross-sectional view illustrating a configuration example of an ultrasonic detecting device according to the first embodiment;
FIG. 14 is a diagram illustrating another configuration example of an ultrasonic detecting device according to the first embodiment;
FIG. 15 is a block diagram illustrating another configuration example of an ultrasonic detecting device according to the first embodiment;
FIG. 16 is a diagram illustrating another configuration example of an ultrasonic detecting device according to the first embodiment;
FIG. 17 is a graph illustrating another configuration example of an ultrasonic detecting device according to the first embodiment;
FIG. 18 is a diagram illustrating yet another configuration example of an ultrasonic detecting device according to the first embodiment;

FIG. 19 is a block diagram illustrating an ultrasonic detecting device according to a second embodiment;

FIG. 20 is a diagram showing an example of the arrangement of the detected matter and the transmitter and receiver of the ultrasonic detecting device according to the second embodiment;

FIG. 21 is a flowchart illustrating a judgment process of the ultrasonic detecting device according to the second embodiment;

FIG. 22 is a diagram illustrating an example of the reception signal detected by the ultrasonic detecting device according to the second embodiment;

FIG. 23 is a diagram illustrating another example of the reception signal detected by the ultrasonic detecting device according to the second embodiment;

FIG. 24 is a block diagram illustrating an ultrasonic detecting device according to a first modification of the second embodiment;

FIG. 25 is a flowchart illustrating the operation of the ultrasonic detecting device according to the first modification of the second embodiment;

FIG. 26 is a block diagram illustrating an ultrasonic detecting device according to a second modification of the second embodiment;

FIG. 27 is a flowchart illustrating the operation of the ultrasonic detecting device according to the second modification of the second embodiment;

FIG. 28 is a block diagram illustrating an ultrasonic detecting device according to a third embodiment;

FIG. 29 is a diagram showing an example of the arrangement of the detected matter and the transmitter and receiver of the ultrasonic detecting device according to the third embodiment;

FIG. 30A is an overall diagram of a transmitter according to the third embodiment, and FIG. 30B is a diagram illustrating a configuration example of the elements in the receiver and the transmitter;

FIG. 31A is a diagram illustrating an example of the ultrasonic waves received in a conventional example, and FIG. 31B is a diagram illustrating an example of the ultrasonic waves received by the ultrasonic detecting device according to this embodiment; and

FIG. 32 is a diagram illustrating another example of the reception signal detected by the ultrasonic detecting device according to the third embodiment.

DETAILED DESCRIPTION

In general, according to one embodiment, there is provided an ultrasonic detecting device, comprising a transmitter arranged at a predetermined angle with respect to a conveying plane on which a sheet is conveyed, the transmitter emitting ultrasonic waves towards the conveying plane; a receiver provided with a plurality of channels for detecting the ultrasonic waves, the receiver detecting the ultrasonic waves incident on the channels;

and a dividing member to shield the receiver from diffraction waves of the ultrasonic waves emitted from the transmitter, the diffraction waves being diffracted at an edge of the sheet that delimits the sheet in a direction perpendicular to a conveying direction of the sheet.

Referring to the accompanying drawings, the following is a detailed explanation of an ultrasonic detecting device as well as a sheet handling apparatus comprising an ultrasonic detecting device according to a first embodiment.

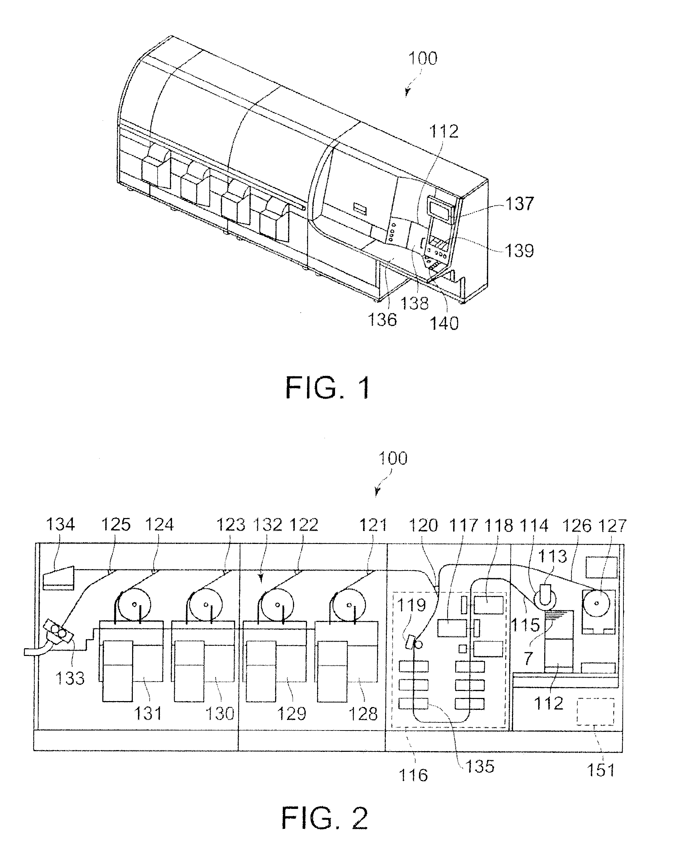

FIG. 1 is a diagrammatic view showing the outer appearance of a sheet handling apparatus 100 in accordance with a first embodiment. As shown in FIG. 1, the sheet handling apparatus 100 includes, on the outside of the apparatus, an insert portion 112, an operating portion 136, an operation/display portion 137, a door 138, a take-out port 139 and a keyboard 140.

The insert portion 112 is configured so that sheets 7, for example banknotes, can be inserted into it. The insert portion 112 receives a batch of stacked sheets 7. The operating portion 136 receives various operation inputs from an operator. The operation/display portion 137 displays various kinds of operation guidance and processing results to the operator. It should be noted that the operation/display portion 137 may also be configured as a touch panel. In this case, the sheet handling apparatus 100 senses various kinds of operation inputs based on buttons that are displayed on the operation/display portion 137, and the operation by the operator on the operation/display portion 137.

The door 138 is for opening and closing the insert opening of the insert portion 112. The take-out port 139 is configured to retrieve the sheets 7 from a collection portion where the sheets 7 that have been judged by the sheet handling apparatus 100 to be unfit for recirculation are stacked.

The keyboard 140 functions as an input section that receives various kinds of operation input from the operator.

FIG. 2 is a diagrammatic view to illustrate a configuration example of the sheet handling apparatus 100 shown in FIG. 1. The sheet handling apparatus 100 includes, on the inside of the apparatus, the insert portion 112, a take-out port 113, a suction roller 114, a conveying route 115, an inspection portion 116, gates 120 to 125, a rejection sheet conveying route 126, a rejection sheet stacker 127, stack/band portions 128 to 131, a cutting portion 133, and a stacker 134. Moreover, the sheet handling apparatus 100 includes a main controller 151. The main controller 151 performs the integrated control of the operation of the various parts of the sheet handling apparatus 100.

The take-out port 113 is arranged above the insert portion. The take-out port 113 includes the suction roller 114. The suction roller 114 is provided such that it contacts the sheets 7 placed into the insert portion 112 at the upper end in stacking direction. That is to say, by rotating, the suction roller 114 takes in the sheets 7 placed in the insert portion 112 one by one from the upper end in stacking direction into the apparatus. The suction roller 114 functions so as to take out one sheet 7 per rotation, for example. Thus, the suction roller 114 takes out the sheets 7 at constant pitch. The sheets 7 taken out by the suction roller 114 are introduced to the conveying route 115.

The conveying route 115 is a conveying means for conveying the sheets 7 to the various parts inside the sheet handling apparatus 100. The conveying route 115 is provided with conveying belts and drive pulleys that are not shown in the drawings. The conveying route 115 causes the conveying belts to operate with a drive motor and drive pulleys not shown in the drawings. The conveying route 115 conveys the sheet 7 taken out by the suction roller 114 at a constant speed with the conveying belts. It should be noted that in the following explanations, the side of the conveying route 115 closer to the take-out port 113 is regarded as the "upstream side", and the side of the conveying route 115 closer to the stacker 134 is regarded as the "downstream side".

The inspection portion 116 is provided on the conveying route 115, which extends from the take-out port 113. The inspection portion 116 includes an image reader 117, an image reader 118, an ultrasonic detecting device 135, and a thickness inspection portion 119. The inspection portion 116 detects optical feature information, mechanical features, and magnetic feature information of the sheets 7. Thus, the sheet handling apparatus 100 inspects the type, damage and dirt, front and back surface, and the genuineness of the sheets 7.

The image readers 117 and 118 are arranged on opposite sides flanking the conveying route 115. The image readers 117 and 118 read the images of both sides of the sheets 7 that are conveyed along the conveying route 115. The image readers 117 and 118 each include a charge-coupled device (CCD) camera. The sheet handling apparatus 100 obtains pattern images of the front surface and the back surface of the sheets 7, based on the images taken with the image readers 117 and 118.

The image readers 117 and 118 temporarily store the read images in a memory, which is not shown in the drawings, inside the inspection portion 116. The sheet handling apparatus 100 displays the images stored in this memory on the operation/display portion 137, in accordance with the operation input.

The ultrasonic detecting device 135 irradiates ultrasonic waves onto the conveyed sheet 7, and detects a transmission wave that is passed through the sheet 7. Thus, the ultrasonic detecting device 135 detects for example the shape of the sheet 7. The ultrasonic detecting device 135 may also detect a foreign material, such as a piece of tape or the like that is stuck to the sheet 7.

The thickness inspection portion 119 inspects the thickness of the sheets 7 that are conveyed on the conveying route 115. For example, if the detected thickness has at least a predetermined value, the sheet handling apparatus 100 detects that two sheets 7 have been taken out at the same time.

Moreover, the inspection portion 116 includes a magnetic sensor that is not shown in the drawings. This magnetic sensor detects magnetic feature information concerning the sheets 7.

Based on the detection result from the image readers 117, 118, the ultrasonic detecting device 135, the thickness inspection portion 119, and the magnetic sensor and the like, the main controller 151 performs various kinds of judgments. For example, the main controller 151 judges the category of the sheet 7.

Moreover, the main controller 151 performs an authentication of the sheet 7. That is to say, the main controller 151 judges whether the sheet 7 is a legal sheet or an illegal sheet.

Moreover, the main controller 151 senses whether the sheet 7 is recirculatable or unrecirculatable. That is to say, the main controller 151 judges whether the sheet 7 is a recirculatable sheet that is fit for recirculation or an unrecirculatable sheet that is unfit for recirculation.

Furthermore, the main controller 151 judges whether the sheet 7 is a rejection bill. That is to say, the main controller 151 determines sheets 7 that have been judged to be not genuine bills, or sheets 7 for which an overlap is sensed by the thickness inspection portion 119 to be rejection bills. That is to say, "rejection bills" is a category of sheets 7 that does not correspond to intact or damaged bills.

The sheet handling apparatus 100 conveys sheets 7 that have been judged to be intact bills to the stack/band portions 128 to 131. Moreover, the sheet handling apparatus 100 conveys sheets 7 that have been judged to be damaged bills to a cutting portion 133. The cutting portion 133 cuts the damaged bills conveyed to it. It should be noted that the sheet handling apparatus 100 may also convey the damaged bills to the stacker 134 and stack them there. The stacker 134 applies a wrapper every time that for example 100 stacked damaged bills have arrived.

The sheet handling apparatus 100 conveys the sheets 7 that have been judged to be rejection bills to the rejection sheet stacker 127. Rejection bills are for example improperly conveyed bills, such as double take-outs, defective bills, such as folded or ripped bills, and bills that could not be discriminated, such as wrong bill types or counterfeit bills.

The gates 120 to 125 are arranged in order along the conveying route 115 on the downstream side of the inspection portion 116. The gates 120 to 125 are each controlled by the main controller 151. The main controller 151 controls the operation of the gates 120 to 125 based on the inspection result from the inspection portion 116. Thus, the main controller 151 performs the control such that the sheets 7 conveyed on the conveying route 115 are conveyed to a predetermined processing portion.

The gate 120 arranged immediately behind the inspection portion 116 branches the conveying route 115 to a rejection sheet conveying route 126. That is to say, as a result ofthe inspection with the inspection portion 116, the gate 120 is switched such that the rejection bills that have been judged not to be legitimate bills, the bills that could not be inspected by the inspection portion 116 and the like are conveyed to the rejection sheet conveying route 126.

The rejection sheet stacker (rejection portion) 127 is provided at the rear end ofthe rejection sheet conveying route 126. The rejection sheet stacker 127 stacks the above-noted rejection bills, and bills that could not be inspected and so on mentioned above, in the orientation in which they were taken out from the take-out port 113. The sheets 7 stacked in the rejection sheet stacker 127 can be taken out from the take-out port 139.

Moreover, the stack/band portions 128 to 131 (collectively referred to as "stack/band portion 132") are provided respectively behind the branching of the gates 121 to 124. The sheets 7 that have been judged to be fit for recirculation are stacked in the stack/band portion 132, sorted by type and front/back side. The stack and/ portion 132 bands and stores the stacked sheets 7 in packs of a predetermined number.

The cutting portion 133 is arranged behind the branching of the gate 125. The cutting portion 133 cuts and stores sheets 7. The sheets 7 that are conveyed by the gate 125 are legitimate sheets 7 that have been judged to be unfit for recirculation (damaged bills).

The stacker 134 is placed at the end of the other conveying route branched by the gate 125. If the damaged bill cutting mode is selected, the main controller 151 controls the gate 125 such that the sheets 7 are conveyed to the cutting portion 133. And if the damaged bill cutting mode is not selected, the main controller 151 controls the gate 125 such that the sheets 7 are conveyed to the stacker 134.

The main controller 151 successively stores the number of sheets 7 stacked by the stack/band portion 132, the number of sheets 7 cut by the cutting portion 133, and identification information.

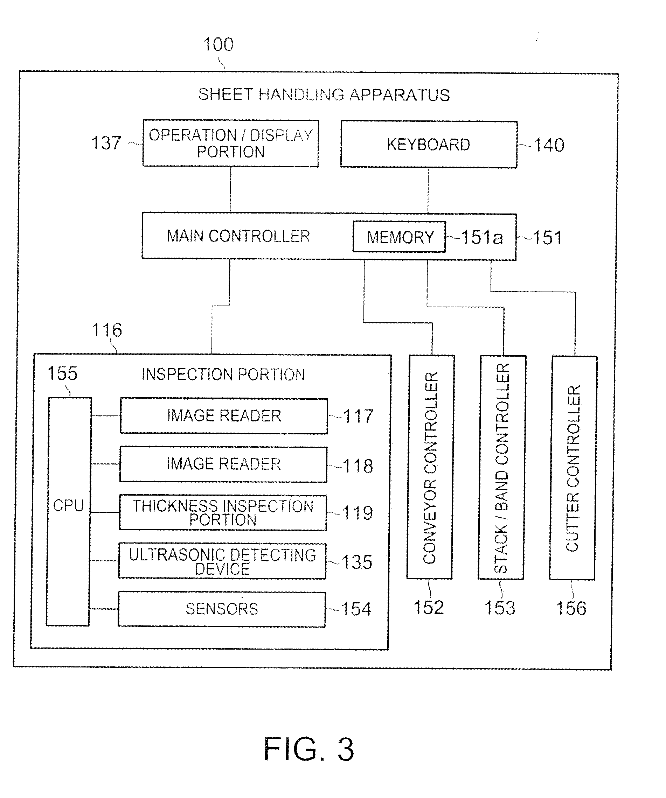

FIG. 3 is a block diagram illustrating a configuration example of a control system of the sheet handling apparatus 100 shown in FIG. 1 and FIG. 2.

The sheet handling apparatus 100 includes the main controller 151, the inspection portion 116, a conveyor controller 152, a stack/band controller 153, a cutter controller 156, the operation/display portion 137, and the keyboard 140.

The main controller 151 performs the overall control of the sheet handling apparatus 100. The main controller 151 controls the conveyor controller 152 and the stack/band controller 153 based on the commands entered into the operation/display portion 137 and the inspection result from the inspection portion 116.

For example, an operator may enter the name of the supplier and the processing method of the processed sheets 7 and thresholds for judging the various types of sheets 7 with the operation/display portion 137 or the keyboard 140.

The inspection portion 116 includes the image readers 117 and 118, the thickness inspection portion 119, the ultrasonic detecting device 135, other sensors 154 and a CPU 155.

The image readers 117 and 118 read an image from both sides of the sheets 7 that are conveyed on the conveying route 115. The image readers 117 and 118 include a light-receiving element, such as a CCD, and an optical system. The image readers 117 and 118 project light onto the conveyed sheets 7 and receive the reflected light or the transmitted light with the optical system. The image readers 117 and 118 image the light received with the optical system onto the CCD and obtain an electric signal (image).

The main controller 151 stores an image (reference image) serving as a reference for the sheet 7 in advance in a memory 151a. The main controller 151 subjects the sheets 7 to various judgments by comparing the image obtained from the sheets 7 with the reference image stored in the memory 151a.

As described above, the ultrasonic detecting device 135 irradiates ultrasonic waves onto the conveyed sheets 7. The ultrasonic detecting device 135 also detects the sonic waves that are passed through the sheets 7. Furthermore, a memory 151a stores a threshold for comparing the detection result of the ultrasonic detecting device 135. The main controller 151 subjects the sheets 7 to various kinds of judgments based on the detection result from the ultrasonic detecting device 135 and the threshold stored in the memory 151a.

If foreign material adheres to a sheet 7, then the intensity of the ultrasonic wave that is passed through the sheet 7 (transmission wave) is attenuated. Based on the detection result from the ultrasonic detecting device 135 and the threshold stored in the memory 151a, the main controller 151 judges whether foreign material is adhering to the sheet 7.

The thickness inspection portion 119 inspects the thickness of the sheets 7 that are conveyed on the conveying route 115. The other sensors 154 are for example magnetic sensors or the like. The magnetic sensors detect information on magnetic features from the sheets 7 that are conveyed on the conveying route 115.

The CPU 155 controls the operation of the image readers 117 and 118, the thickness inspection portion 119, the ultrasonic detecting device 135, and the other sensors 154. Moreover, the CPU 155 communicates data to the main controller 151. That is to say, the CPU 155 communicates the sensing result of the various parts of the inspection portion 116 to the main controller 151.

Based on the control of the main controller 151, the conveyor controller 152 controls the take-out port 113, the conveying route 115, the rejection sheet conveying route 126, and the gates 120 to 125. Accordingly, the conveyor controller 152 controls the take-out and the conveying of the sheets 7. Moreover, the conveyor controller 152 performs a sorting process, in which the judged sheets 7 are sorted by type. That is to say, the conveyor controller 152 functions as a sorting processor.

For example, if the ultrasonic detecting device 135 detects that foreign material adheres to a sheet 7, then the conveyor controller 152 controls the gates 120 to 125 such that the sheet 7 is conveyed to the rejection sheet stacker 127, the cutting portion 133 or the stacker 134.

The stack/band controller 153 controls the rejection sheet stacker 127 and the stack/band portions 128 to 131 based on the control of the main controller 151. Thus, the stack/band controller 153 controls the stacking and the banding of the sheets 7.

The cutter controller 156 controls the operation of the cutting portion 133 based on the control of the main controller 151. Thus, the cutting portion 133 performs the cutting of the conveyed sheets 7.

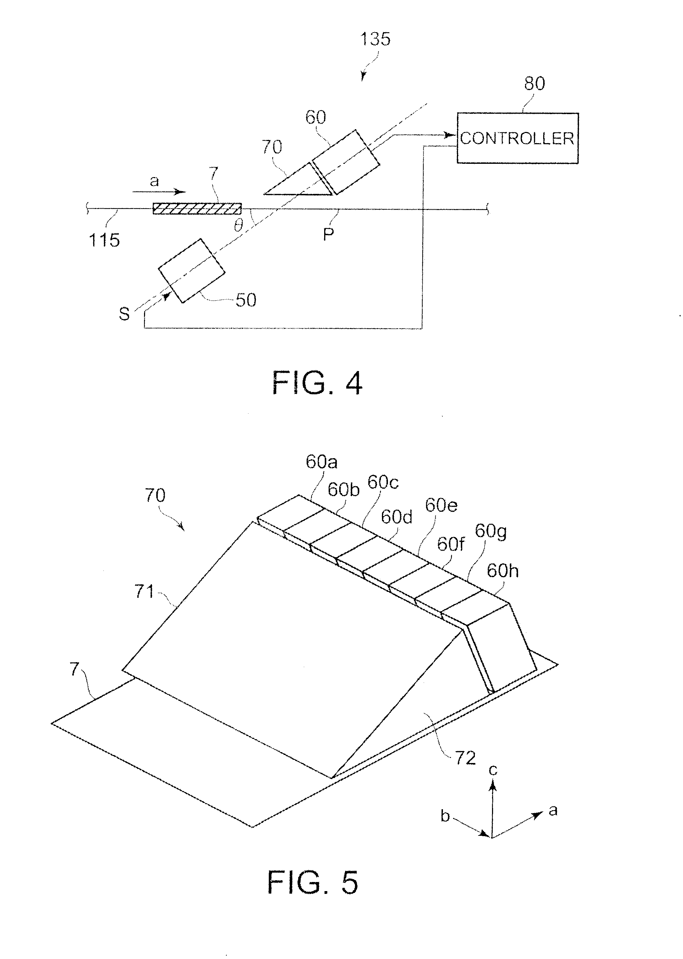

FIG. 4 is a diagrammatic view illustrating a configuration example of the ultrasonic detecting device 135 shown in FIGS. 2 and 3. FIG. 5 is a diagram, viewed from a certain angle, of a portion of the ultrasonic detecting device 135 shown in FIG. 4. The ultrasonic detecting device 135 is installed near the conveying route 115 of the sheet handling apparatus 100.

As shown in FIG. 4, the ultrasonic detecting device 135 comprises a transmission sensor 50, a reception sensor 60, a dividing member 70, and a controller 80. It should be noted that the arrow "a" in FIG. 4 indicates the conveying direction of the sheet 7. The arrow "b" shown in FIG. 5 indicates a scanning direction of the transmission sensor 50 and the reception sensor 60. It should be noted that the conveying direction "a" and the scanning direction "b" are perpendicular to each other. Moreover, the arrow "c" indicates a direction perpendicular to the plane (conveying plane P) defined by the conveying direction "a" and the scanning direction "b".

The transmission sensor 50 is a transmission portion that irradiates ultrasonic waves onto a sheet 7 that is conveyed at a constant speed in conveying direction "a". The transmission sensor 50 is installed at a position opposite to the reception sensor 60, such the conveying route 115 is arranged between the transmission sensor 50 and the reception sensor 60. The transmission sensor 50 comprises a piezoelectric element. The piezoelectric element includes a piezoelectric body as well as a pair of electrodes arranged to hold the piezoelectric body between them.

By applying a voltage to the electrodes of the piezoelectric element, the transmission sensor 50 changes the shape of the piezoelectric body. By applying a pulse signal to the electrodes of the piezoelectric element, the transmission sensor 50 causes the piezoelectric body to oscillate. As a result, the transmission sensor 50 generates an ultrasonic wave.

The transmittance of the ultrasonic waves passing through the sheet 7 varies depending on the angle of incidence of the ultrasonic waves. For this reason, the transmission sensor 50 is installed such that the angle of incidence of the ultrasonic waves on the sheet 7 becomes optimal. It should be noted that the optimum angle differs depending on the material and the structure of the sheet 7. As shown in FIG. 4, the transmission sensor 50 is arranged such that the propagation direction of the irradiated ultrasonic waves form an angle θ with the conveying direction "a" of the sheet 7. It should be noted that this angle θ is an oblique angle that is not 90°.

The reception sensor 60 is a receiver that detects the transmission wave that has been emitted from the transmission sensor 50 and passed through the sheet 7. The reception sensor 60 is arranged at a position opposing the transmission sensor 50, such that the conveying route 115 is arranged between the transmission sensor 50 and the reception sensor 60. The reception sensor 60 includes a piezoelectric element, just like the transmission sensor 50.

The reception sensor 60 generates a signal corresponding to the change of the shape of its piezoelectric body. If an ultrasonic wave is irradiated onto the reception sensor 60, the piezoelectric body changes its shape in accordance with the intensity and cycle length of the ultrasonic wave. That is to say, the reception sensor 60 generates a signal in accordance with the intensity and cycle length of the ultrasonic wave. Thus, the reception sensor 60 detects a transmission wave that has passed through the sheet 7. It should be noted that the reception sensor 60 is arranged at the same angle as the transmission sensor 50 with respect to the conveying direction "a".

That is to say, the transmission sensor 50 and the reception sensor 60 are arranged on an axis S forming an angle θ with the conveying direction "a". The transmission sensor 50 outputs an ultrasonic wave that is propagated parallel to the axis S. That is to say, the transmission sensor 50 is installed such that the surface from which the ultrasonic wave is output (vibration surface) is perpendicular to the axis S. Moreover, the reception sensor 60 is installed such that the surface on which the ultrasonic wave is incident (vibration surface) is perpendicular to the axis S.

As shown in FIG. 5, the reception sensor 60 includes a plurality of channels 60a to 60h made by dicing the piezoelectric element. The reception sensor 60 detects ultrasonic waves with each channel, and generates signals corresponding to the intensity of those ultrasonic waves. That is to say, each channel of the reception sensor 60 can detect ultrasonic waves from different ranges. It should be noted that the number of channels is merely an example, and the number and size of the channels can be determined in accordance with the resolution of the reception sensor 60.

The transmission sensor 50 irradiates ultrasonic waves within a predetermined range (irradiation range) on the above-noted conveying plane P. The transmission sensor 50 is configured such that an irradiation range of a size including at least the range in which the sheet 7 is conveyed is formed in the scanning direction "b".

The channels of the reception sensor 60 respectively receive ultrasonic waves from a predetermined range (detection range) on the above-noted conveying plane P. The reception sensor 60 is configured such that its detection range, which is the combination of detection ranges of the individual channels, is of a size including at least the range in which the sheet 7 is conveyed is formed in the scanning direction "b".

If a sheet 7 is present in the detection range, the channels of the reception sensor 60 detect the ultrasonic waves (transmission waves) emitted from the transmission sensor 50 that have passed through the sheet 7. Moreover, if no sheet 7 is present in the detection range, the channels of the reception sensor 60 detect the ultrasonic waves (direct waves) emitted from the transmission sensor 50 and irradiated directly onto the reception sensor 60.

A controller 80 performs the overall control of the ultrasonic detecting device 135. The controller 80 includes a CPU, a buffer memory, a program memory, and a non-volatile memory.

The CPU carries out various arithmetic operations. The buffer memory temporarily stores the calculation results of the CPU. The program memory and the non-volatile memory store various kinds of programs executed by the CPU as well as control data.

The controller 80 can perform various kinds of processes by executing a program stored in the program memory with the CPU. For example, the controller 80 controls the operation timing of the transmission sensor 50 and the reception sensor 60.

The controller 80 is connected to the CPU 155 of the inspection portion 116 and the main controller 151 shown in FIG. 3. For example, the controller 80 can communicate processing results to the main controller 151 or the CPU 155. Moreover, the controller 80 can control the operation of the ultrasonic detecting device 135 based on the control signals sent from the main controller 151 or the CPU 155.

For example, the controller 80 generates pulse signals. The controller 80 enters the generated pulse signals into the transmission sensor 50. The transmission sensor 50 applies a voltage based on the entered pulse signals to the piezoelectric element. Thus, the transmission sensor 50 emits an ultrasonic wave.

Based on the operation of the piezoelectric element, the reception sensor 60 generates ultrasonic wave detection signals. The reception sensor 60 includes a plurality of channels 60a to 60h, as noted above. The reception sensor 60 detects ultrasonic waves and generates a detection signal individually with each of the channels. The reception sensor 60 communicates the detection signals to the controller 80.

The controller 80 reads in the detection signals detected by the plurality of channels 60a to 60h. The controller 80 reads in the detection signals received from the reception sensor 60 at predetermined intervals. Thus, the controller 80 can obtain the detection signals from the entire conveyed sheet 7.

The dividing member 70 shields the reception sensor 60 from diffraction waves output from the transmission sensor 50 and diffracted at the edges of the sheet 7. The dividing member 70 includes a support member 71 and divider plates 72.

The support member 71 is a member for supporting the divider plates 72, and is not limited to the shape shown in FIG. 5. As long as it can maintain the positional relationship between reception sensor 60 and the divider plates 72, the support member 71 can have any shape.

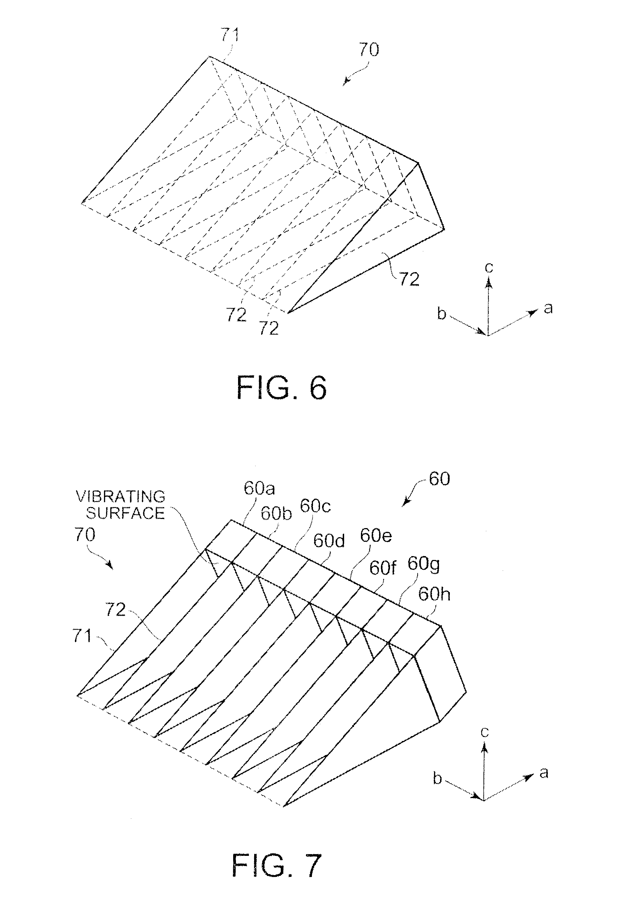

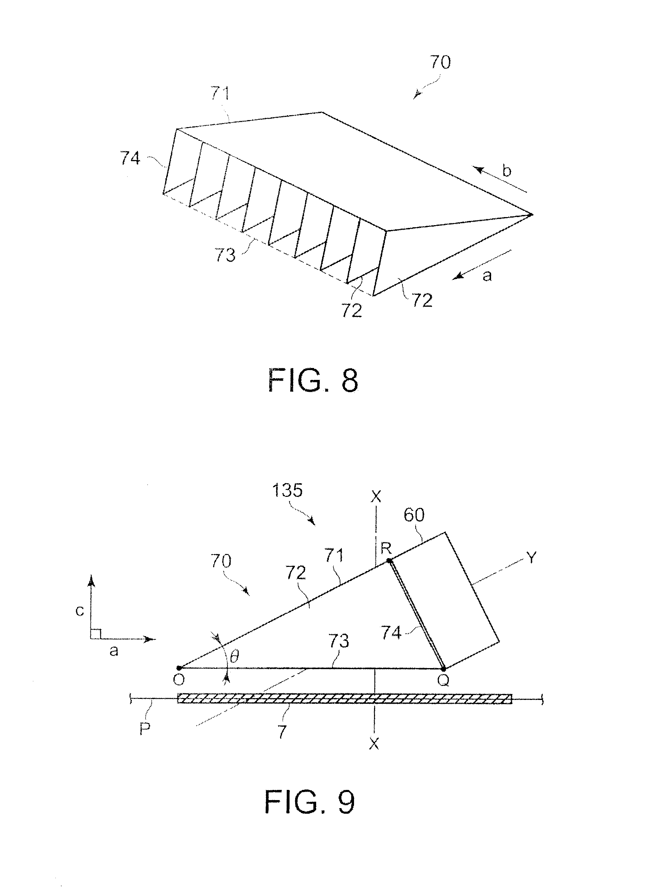

FIGS. 6, 7 and 8 are diagrammatic views illustrating the structure of the dividing member 70 shown in FIG. 5. FIG. 6 is a see-through view of the dividing member 70 taken from a certain angle. FIG. 7 is a diagram of the dividing member 70 with the support member 71 removed, taken from a certain angle. FIG. 8 is a diagram of the dividing member 70 taken from another angle.

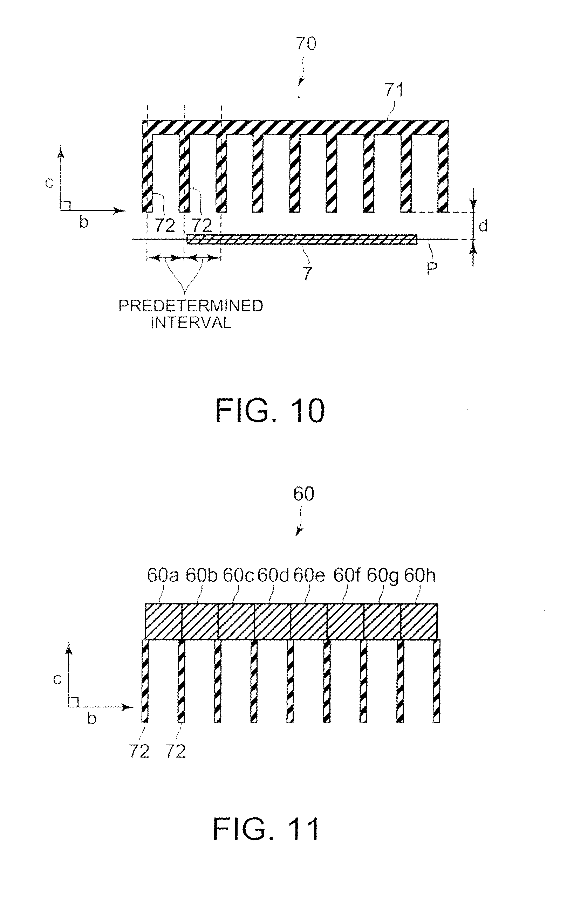

FIG. 9 is a diagram showing a portion of the ultrasonic detecting device 135 shown in FIG. 4, taken from the scanning direction "b". FIG. 10 is a diagram showing a cross-section of the ultrasonic detecting device 135 shown in FIG. 9, taken at the line X-X. FIG. 11 is a diagram showing a cross-section of the ultrasonic detecting device 135 shown in FIG. 9, taken at the line Y-Y, which is parallel to the axis S.

The divider plates 72 are each provided with a plan wall parallel to the conveying direction "a" and to the direction "c" perpendicular to the conveying plane P. The divider plates 72 are made of polyvinylchloride, for example, but there is no limit to this configuration. As long as the divider plates 72 can block at least diffraction waves diffracted at the sheet 7, they can have any configuration. The propagation of sound waves depends on the thickness and the density of a material. Therefore, the material and the thickness of the divider plate 72 is selected as appropriate in accordance with the resolution of the reception sensor 60.

As shown in FIGS. 6 to 8, the dividing member 70 includes a plurality of the divider plates 72. As shown in FIG. 10, the divider plates 72 are arranged at a predetermined spacing in the scanning direction "b". The dividing member 70 includes a plurality of ultrasonic wave paths that are divided by the plurality of divider plates 72.

Moreover, as shown in FIG. 8, the dividing member 70 includes openings in a region 73 (incidence region) opposing the conveyed sheet 7, that is, the conveying plane. Furthermore, as shown in FIGS. 8 and 9, the dividing member 70 is provided with openings in a region 74 (exit region) opposing the vibration surface of the reception sensor 60.

As shown in FIG. 7 and FIG. 11, the dividing member 70 and the reception sensor 60 are installed such the divider plates 72 are provided between the individual channels of the reception sensor 60. Thus, the ultrasonic waves incident on the channels of the reception sensor 60 are partitioned by the divider plates 72 in the scanning direction "b". That is to say, the dividing member 70 guides the ultrasonic waves that are incident on the incidence region with the respective ultrasonic wave paths such that they exit from the corresponding exit region.

Moreover, the diffraction waves that are diffracted at the edges of the sheet 7 are diffracted and propagated in the scanning direction "b". Each of the divider plates 72 is provided with a plan wall that is parallel to a plane including the conveying direction "a" and to the direction "c" that is perpendicular to the conveying plane P. That is to say, the divider plates 72 each include a surface that is perpendicular to the scanning direction "b". Therefore, the dividing member 70 blocks the propagation of the diffraction waves in the ultrasonic wave paths formed by the divider plates 72, and can guide the transmission waves that have passed through the sheet 7 to the vibration surface of the reception sensor 60. Thus, the dividing member 70 can guide the ultrasonic waves propagated along the ultrasonic wave paths to the individual channels of the reception sensor 60.

Moreover, as shown in FIG. 9, the dividing member 70 is formed such that the incidence region 73 opposing the conveyed sheet 7 is parallel to the conveying plane P including the conveying direction "a" of the sheet 7 and the scanning direction "b". That is to say, the line segment OQ of the divider plates 72 is parallel to the conveying direction "a".

Furthermore, the dividing member 70 is formed such that the exit region 74 is parallel to the opposing vibration surface of the reception sensor 60. That is to say, the exit region 74 is a plane that is perpendicular to the axis S shown in FIG. 4. That is to say, the line segment RQ of the divider plates 72 is perpendicular to the axis S.

Moreover, the divider plates 72 should partition the ultrasonic waves at least in the section from the detection range of the reception sensor 60 up to the vibration surface of the reception sensor 60. Therefore, the line segment OR of the partition plates 72 is formed such that it forms an angle θ with the line segment OQ.

It should be noted that, as shown in FIG. 10, the dividing member 70 is arranged such that a predetermined distance "d" is kept between the incidence region 73 of the dividing member 70 and the conveying plane P. The distance "d" is a margin to provide tolerance with regard to flutter in the direction perpendicular to the sheet 7.

The influence of the ultrasonic waves diffracted by the sheet 7 depends on the distance between the sheet 7 and the incidence region 73 of the dividing member 70. That is to say, if the distance between the sheet 7 and the incidence region 73 of the dividing member 70 is large, then the influence of ultrasonic waves diffracted by the sheet 7 is also large.

Accordingly, it is preferable that the distance "d" between the incidence region 73 of the dividing member 70 and the conveying plane P has a value that allows flutter of the sheet 7 and is as small as possible. That is to say, it is preferable that the dividing member 70 does not contact the sheet 7 conveyed along the conveying plane P and is placed at a position that is as close as possible to the conveying plane P.

As noted above, the ultrasonic detecting device 135 according to the first embodiment includes the transmission sensor 50, the reception sensor 60, and the dividing member 70. The dividing member 70 includes a plurality of divider plates 72 having a wall that is parallel to a plane including the direction "c" perpendicular to the conveying plane P in which the sheet 7 is conveyed and to a direction "a" that is perpendicular to the sheet 7. Moreover, the dividing member 70 includes a plurality of ultrasonic wave paths that are partitioned by the plurality of divider plates 72. Moreover, the dividing member 70 includes an incidence region 73 and an exit region 74 formed by the plurality of divider plates 72. The incidence region 73 is provided parallel to the conveying plane P of the sheets 7. Moreover, the exit region 74 is arranged at a position next to the vibration surface of the reception sensor. The dividing member 70 guides the ultrasonic waves incident on the incidence region 73 with the respective ultrasonic wave paths, such that they exit from the exit region 74.

Thus, the dividing member 70 can guide the ultrasonic waves incident on the incidence region 73 to the channels of the reception sensor 60. Furthermore, the dividing member 70 can prevent that ultrasonic waves diffracted at the edges of the sheet 7 are incident on channels of the reception sensor 60 that face the sheet 7. As a result, an ultrasonic detecting device that can carry out a more precise inspection as well as a sheet handling apparatus including such an ultrasonic detecting device can be provided.

It should be noted that in the above-described first embodiment, it was explained that the dividing member 70 and the reception sensor 60 are configured to be arranged separately, but there is no limitation to this configuration. It is also possible that the reception sensor 60 and the dividing member 70 are configured as a combination.

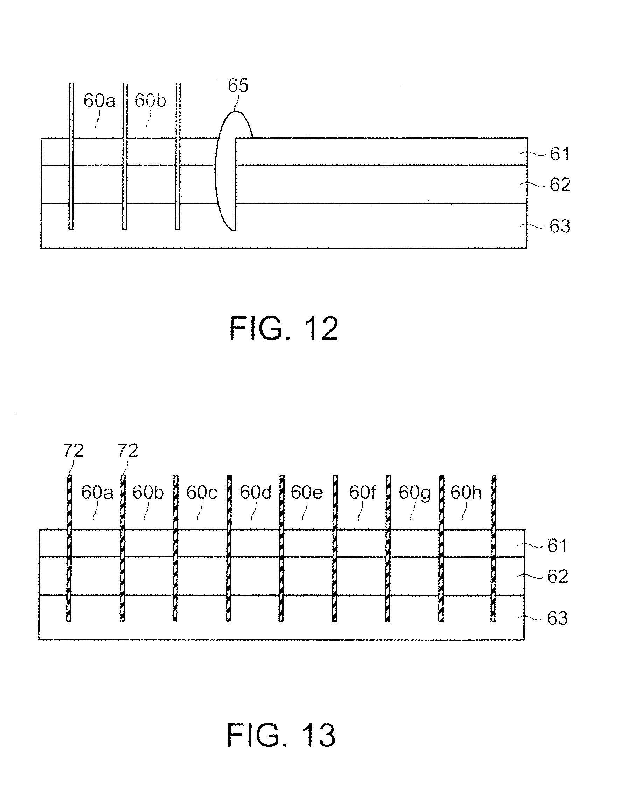

FIG. 12 is a diagrammatic view illustrating a configuration example of the reception sensor 60 shown in FIG. 4. The reception sensor 60 includes a matching layer 61, a piezoelectric element 62 and a backing layer 63. The matching layer 61 is configured such that ultrasonic waves are propagated efficiently between the reception sensor 60 and air. Ordinarily, there is a large difference between the acoustic impedance of the piezoelectric element 62 and the acoustic impedance of air. Therefore, most of the supersonic waves are reflected at their interface.

The matching layer 61 is configured to have an acoustic impedance that is intermediate between the acoustic impedance of the piezoelectric element 62 and the acoustic impedance of air. By providing the matching layer 61 between the piezoelectric element 62 and the air, the reception sensor 60 can efficiently detect the ultrasonic waves propagated through the air.

It should be noted that the matching layer 61 is bonded to the piezoelectric element 62. Therefore, the matching layer 61 oscillates together with the piezoelectric element 62.

The piezoelectric element 62 includes a piezoelectric body, which may be a quartz crystal or a ceramic or the like, and electrodes arranged on both sides of the piezoelectric body. When a pulse signal is applied, the piezoelectric body displays the piezoelectric effect of oscillating in accordance with the cycle period and intensity of the applied pulse signal. Thus, the piezoelectric body can convert an electric signal into an ultrasonic wave. Furthermore, the piezoelectric body can convert an ultrasonic wave into an electric signal.

The backing layer 63 absorbs acoustic energy (oscillations) that is radiated from the piezoelectric element 62 to the rear side (back side) of the matching layer 61. Moreover, the backing layer 63 suppresses free oscillations of the piezoelectric element 62.

As noted above, the reception sensor 60 is provided with a plurality of channels, which are formed by dicing the piezoelectric element with a dicing blade 65.

To manufacture the reception sensor 60, incisions are cut with the dicing blade 65 into a layered structure in which the matching layer 61, the piezoelectric element 62 and the backing layer 63 are layered upon each other, from the side of the matching layer 61, such that grooves are formed that are parallel to the conveying direction "a" of the sheet 7. In this situation, the incisions are cut at least to a depth corresponding to the thickness of the matching layer 61 and the piezoelectric element 62. That is to say, the grooves formed by the dicing process reach at least the backing layer.

Furthermore, as shown in FIG. 13, the divider plates 72 may be fitted into the grooves formed by the dicing process. Thus, the dividing member 70 is configured by the plurality of divider plates 72, which are fitted into the grooves that partition the channels of the reception sensor 60.

The portion of the fitted divider plates 72 that is exposed (exposed portion) has the same shape as the example shown in FIG. 9. That is to say, the exposed portion of the divider plates 72 includes plan walls that are parallel to the plane including the conveying direction "a" and the direction "c" that is perpendicular to the conveying plane P. Moreover, the exposed portion of the divider plates 72 includes one side (first side) that is parallel to the conveying plane P if the reception sensor 60 is provided on the axis S. Furthermore, the exposed portion ofthe divider plates 72 has one side (second side) forming an angle θ with the first side.

Also with this configuration, the dividing member 70 can form an incidence region 73 opposing the conveying plane P. Also, the dividing member 70 is fit into the grooves for partitioning the channels of the reception sensor 60. Therefore, ultrasonic wave paths are formed that guide the ultrasonic waves that are incident on the incidence region 73 with the divider plates 72 to the respective channels of the reception sensor 60.

Also with this configuration, the dividing member 70 can prevent that ultrasonic waves diffracted at the edges of the sheet 7 are incident on the channels of the reception sensor 60 facing the sheet 7. As a result, an ultrasonic detecting device and a sheet handling apparatus including an ultrasonic detecting device can be provided, with which a more precise inspection can be carried out.

Moreover, by controlling the timing at which the ultrasonic waves are detected, it is possible to suppress the influence of diffraction waves diffracted at the edges of the sheet 7.

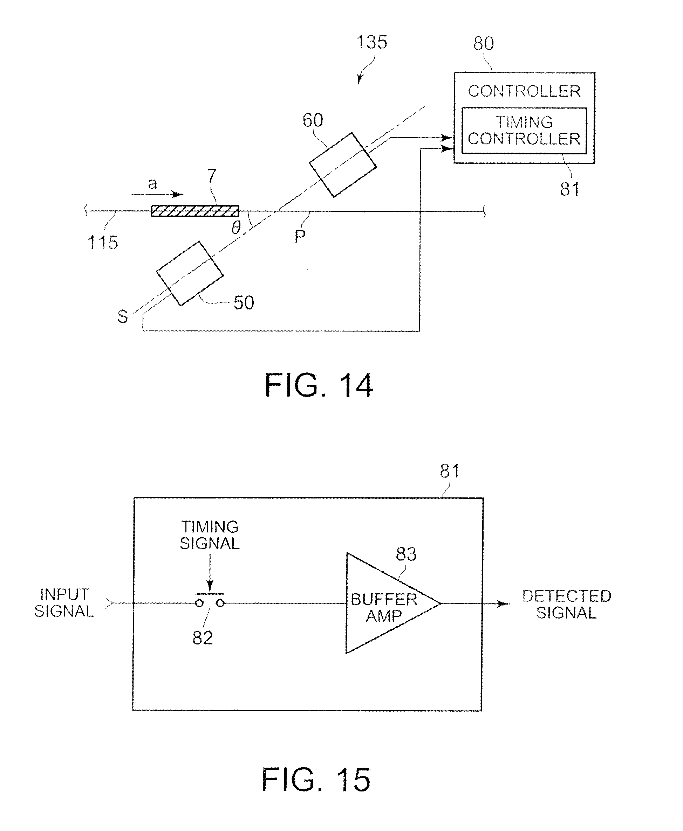

FIG. 14 is a diagrammatic view illustrating the configuration of the ultrasonic wave detecting device 135 according to a first modification of the first embodiment. It should be noted that the same reference numerals are given to structural features that are the same as in FIG. 4, and their further explanation has been omitted.

As shown in FIG. 14, the controller 80 of the ultrasonic detecting device 135 includes a timing controller 81.

The timing controller 81 is configured to control the timing at which signals are detected by the reception sensor 60. The configuration of the timing controller 81 is shown in FIG. 15.

The timing controller 81 includes a switch 82 and a buffer amplifier 83. Moreover, the timing controller 81 includes an input terminal and an output terminal.

A signal detected by the reception sensor 60 (input signal) is input into the input terminal. Based on the timing signal generated by the timing controller 81, the switch 82 switches the input signal that is input into the input terminal. Thus, the switch 82 transmits the input signal to a downstream circuit only when the timing signal is ON, for example.

It should be noted that the timing controller 81 determines the detection timing at which the detection is performed, based on the air temperature and the conveying position and conveying speed of the sheet 7, for example. Thus, the timing controller 81 generates the timing signal.

The signal transmitted through the switch 82 passes through the buffer amplifier 83, and is output as the detection signal from the output terminal. That is to say, the timing controller 81 controls the timing at which the signal detected by the reception sensor 60 is received. Thus, the timing controller 81 can control the timing at which the signal is detected.

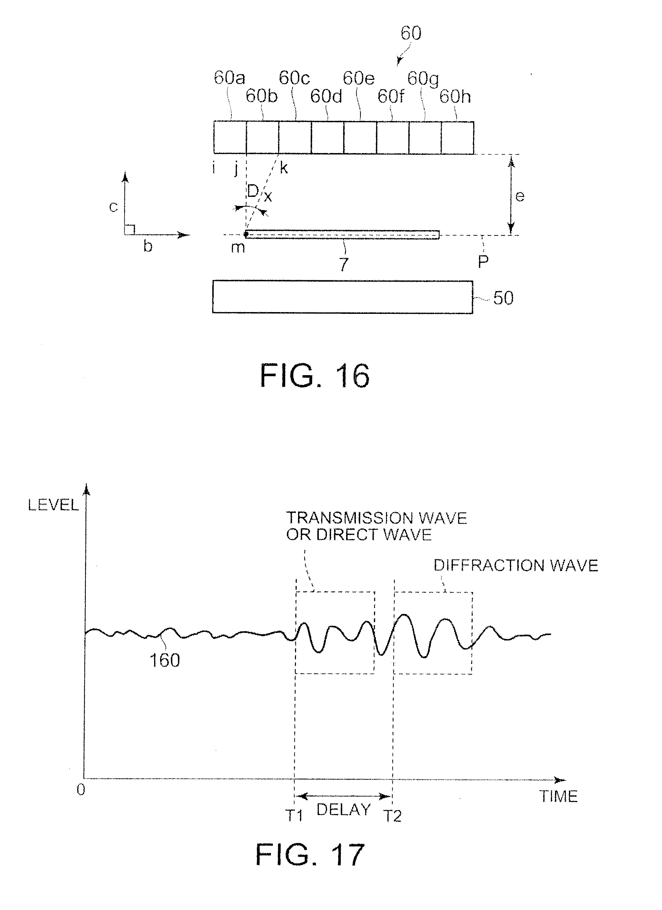

FIG. 16 is a diagrammatic view illustrating the positions at which the various portions of the ultrasonic detecting device 135 in FIG. 14 are placed. As shown in FIG. 16, the reception sensor 60 includes a plurality of channels 60a to 60h. The edge of the channel 60a is marked with the point i, the border between the channels 60a and 60b is marked with the point j, and the border between the channels 60b and 60c is marked with the point k. Furthermore, one edge of the sheet 7 is marked "m". The reception sensor 60 and the conveying plane P in which the sheet 7 is conveyed are spaced apart by a distance "e".

As shown in FIG. 16, there is no sheet 7 between the channel 60a and the transmission sensor 50. In other words, the channel 60a does not face the sheet 7. For this reason, ultrasonic waves emitted from the transmission sensor 50 are directly incident within the range from point i to point j of the channel 60a. In this case, the channel 60a detects direct waves.

And as shown in FIG. 16, the sheet 7 is present between the channel 60b and the transmission sensor 50. In other words, the channel 60b faces the sheet 7. For this reason, transmission waves emitted from the transmission sensor 50 and passing through the sheet 7 are incident within the range from point j to point k of the channel 60b. Moreover, diffraction waves emitted from the transmission sensor 50 and diffracted at the edge m of the sheet 7 are incident within the range from point j to point k of the channel 60b. In this case, the channel 60b detects transmission waves and diffraction waves.

However, due to the diffraction, the diffraction waves incident on the channel have been transmitted for a longer distance than the transmission waves. The transmission waves passing through the sheet 7 are propagated through the air by a distance "e", before they are incident on the reception sensor 60. By contrast, the diffraction waves diffracted at the edge "m" of the sheet 7 are propagated by a longer distance than the transmission waves, before they are incident on the reception sensor 60.

The propagation distance of the diffraction waves that are diffracted by the edge m of the sheets 7 and incident on the reception sensor 60 is "x", for example. And the angle defined by the direction in which the diffraction waves are propagated and the direction in which the transmission waves are propagated (the direction of the axis S in FIG. 4) is D. In this case, the relation

$$x = e/\cos D \text{ holds.}$$

That is to say, whereas the distance over which the transmission waves are propagated is "e", the distance over which the diffraction waves are propagated is $x = e/\cos D$. Since $\cos D \leq 1$, the relationship $x > e$ also holds.

Let "v" be the speed of sound. As long as the conditions are the same, "v" is constant. Moreover, if T1 is the time from the transmission through the sheet 7 to the incidence on the reception sensor 60, then the relationship $T1 = e/v$ holds. And if T2 is the time from the diffraction at the edge "m" of the sheet 7 to the incidence on the reception sensor 60, then the relationship $T2 = x/v = e/v \cdot \cos D$ holds.

That is to say, the diffraction waves reach the reception sensor 60 with a delay of $T2 - T1 = (e - e\cos D)/v \cdot \cos D$ compared to the transmission waves.

FIG. 17 is a diagrammatic view illustrating the signal detected by the reception sensor 60. The horizontal axis of the graph shown in FIG. 17 marks the time. The vertical axis marks the intensity of the detected signal (level).

The curve 160 indicates the intensity of the ultrasonic wave detected by one channel of the reception sensor 60. As shown in FIG. 17, a transmission wave or a direct wave is detected by this channel of the reception sensor 60 at the time T1. Moreover, a diffraction wave is detected by this channel of the reception sensor 60 at the time T2.

Accordingly, the timing controller 81 carries out the signal detection from the time T1 at which the transmission wave or direct wave reaches the reception sensor 60 to the time T2 when the diffraction wave reaches the reception sensor 60. That is to say, the timing controller 81 determines the interval from the time T1 to the time T2 to be the detection timing. The timing controller 81 outputs an ON timing signal to the switch 82 shown in FIG. 15 from time T1 to time T2.

The timing controller 81 calculates the time T1 and the time T2 based on the air temperature and the conveying position and conveying speed of the sheet 7. It should be noted that the timing controller 81 may also be configured to determine, as the detection timing, the time until a preset period of time has passed after detecting an ultrasonic wave of a predetermined value.

Thus, the ultrasonic detecting device 135 can suppress the influence of diffraction waves that are diffracted by the edges of the sheet 7. As a result, it is possible to provide an ultrasonic detecting device as well as a sheet handling apparatus including an ultrasonic detecting device that can perform an inspection with higher precision.

Furthermore, the ultrasonic detecting device 135 shown in FIG. 14 may be configured to further comprise the dividing member 70 shown in FIG. 4. In this case, the ultrasonic detecting device 135 shields off the diffraction waves with the dividing member 70, and furthermore controls the detection timing. With this configuration, it is possible to suppress the influence of the diffraction waves even further.

Moreover, it was explained above that by arranging the incidence region 73 of the dividing member 70 close to the conveying plane P, the ultrasonic detecting device 135 suppresses the influence of diffraction waves, but it is also possible to simply arrange the vibration surface of the reception sensor 60 and the conveying plane P close to each other.

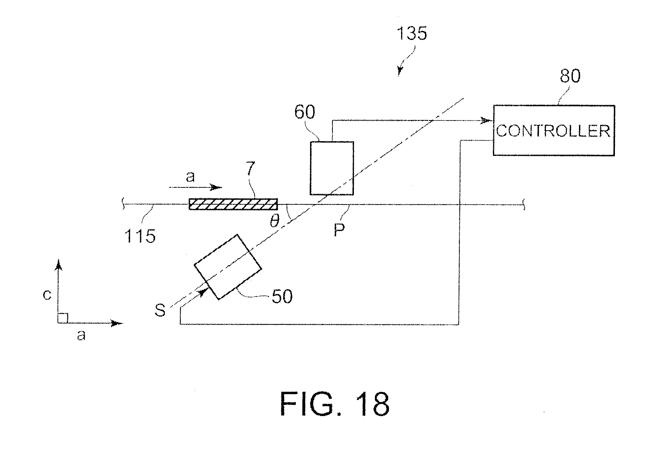

FIG. 18 is a diagrammatic view illustrating a second modification of the ultrasonic detecting device 135 according to the first embodiment. It should be noted that the same reference numerals are given to structural features that are the same as in FIG. 4, and their further explanation has been omitted.

The ultrasonic detecting device 135 includes a transmission sensor 50, a reception sensor 60 and a controller 80.

The reception sensor 60 is a receiver that detects transmission waves that have been sent out from the transmission sensor 50 and passed through the sheet 7. The reception sensor 60 is arranged at a position opposing the transmission sensor 50, such that the conveying route 115 is arranged between the transmission sensor 50 and the reception sensor 60. The reception sensor 60 is placed at an angle, such that its vibration surface is parallel to the conveying plane P. By placing the reception sensor 60 in this manner, the distance between the conveying plane P and the vibration surface of the reception sensor can be made smaller.

With this configuration, the ultrasonic detecting device 135 can suppress the influence of diffraction waves diffracted at the edge of the sheet 7. As a result, it is possible to provide an ultrasonic detecting device as well as a sheet handling apparatus including an ultrasonic detecting device that can perform an inspection with higher precision.

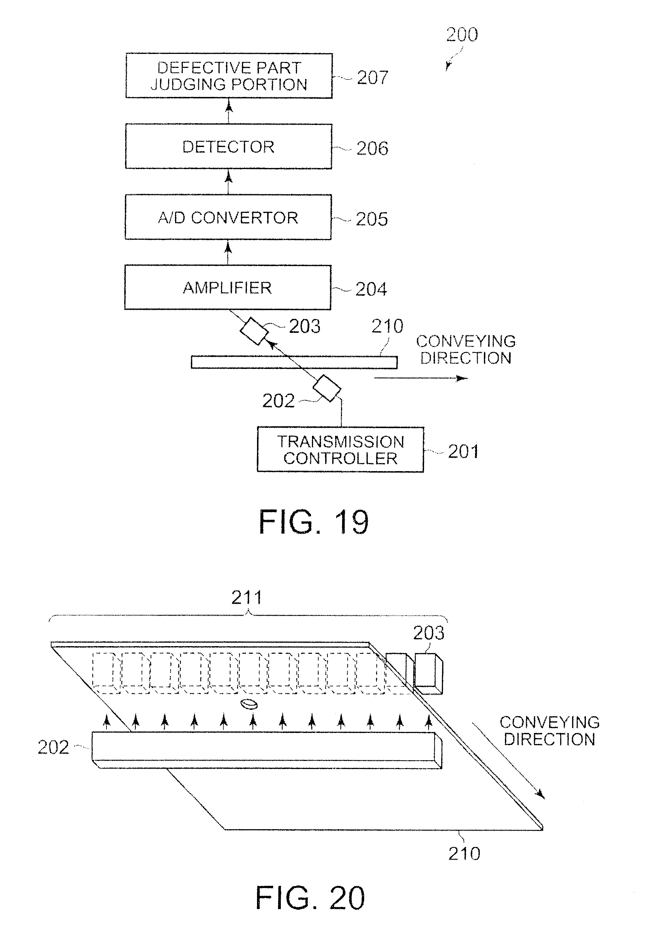

In the following, an ultrasonic detecting device according to a second embodiment is explained with reference to FIG. 19. An ultrasonic detecting device 200 according to the second embodiment includes a transmission controller 201, a transmitter 202, a receiver 203, an amplifier 204, an A/D converter 205, a detector 206, and a defective part judging portion 207. The transmission controller 201 generates a control signal that controls for example the transmission timing of an ultrasonic wave signal. The transmitter 202 receives the control signal from the transmission controller 201 and emits an ultrasonic wave signal. For the ultrasonic waves, it is possible to use a piezoelectric transducer or an oscillation generator using an MEMS (Micro Electro Mechanical System) or the like. In the present embodiment, thickness oscillations of a 1-3-type piezocompound made of a piezoelectric body and a resin may be used as a piezoelectric transducer. By using thickness oscillations, it is possible to irradiate from the entire transmitter 202 an ultrasonic signal having a planar wave of the same phase onto the detected matter. The emission intervals of the ultrasonic waves may be constant intervals, but the ultrasonic waves may also be emitted once every time the detected matter 210 is measured, as explained below.

At least one receiver 203 is arranged, which receives the ultrasonic wave signal that has passed through the detected matter 210, obtaining a reception signal. For the receiver 203, it is possible to use a similar transducer as for the transmitter 202, or a displacement gauge using interference light measuring an oscillation as a displacement. The amplifier 204 may be for example an operation amplifier, which receives the reception signals from the receivers 203 and amplifies the respective reception signals. The A/D converter 205 receives the reception signals that have been amplified by the amplifier 204, and subjects each reception signal to an analog/digital conversion to generate digitized reception signals. The detector 206 receives the reception signals that have been digitized by the A/D converter 205, measures the crest values of the digitized reception signals, and detects whether there is a reception signal having a crest value of at least a threshold value. It should be noted that the crest value of any of a signal intensity, current value, voltage value and power value may be measured.

The defective part judging portion 207 receives the reception signal having a crest value of at least a threshold value from the detector 206, and judges that this reception signal is a defect candidate signal. A defect candidate signal is a signal that indicates that there is the possibility of a defect, such as a hole or a rip at a position where the reception signal received by the receiver 203 has passed through the detected matter. The defective part judging portion 207 judges that the signal is a defect signal if the defect candidate signal has at least a threshold value after a predetermined time period has passed. A defect signal is a signal indicating that there is a defect at the position where the defect candidate signal has passed through the detected matter. Moreover, the defective part judging portion 207 determines, as the defect position, the position where the defect signal has passed through the detected matter. The detected matter 210 may be a sheet, such as a banknote or a card for example, that is placed between the transmitter 202 and the receiver 203 and is conveyed in the same direction by conveying rollers or belts or the like.

Referring to FIG. 20, the following is an explanation of an example of the arrangement of the transmitter 202, the receiver 203 and the detected matter 210. As shown in FIG. 20, in the ultrasonic detecting device of this embodiment, one transmitter 202 is arranged opposite to a receiving array 211, in which at least one row of receivers 203 that are smaller than the transmitter 202 are lined up. The detected matter 210 is placed between the transmitter 202 and the receiving array 211. To inspect the detected matter 210, ultrasonic signals are irradiated from the transmitter 202, and the transmission waves that have passed through the detected matter 210 are received by the receivers 203 of the receiving array 211. The distance between the transmitter 202 and the receivers 203 is a distance at which the receivers 203 can receive the ultrasonic wave signals from the transmitter 202, and should be a distance at which multiply reflected reception signals can be received. In multiple reflection, the reception signals are reflected by the receivers 203 at the ordinary measurement, are again reflected by the transmitter 202 and are again received by the receivers 203. Here, it is desirable that the frequency or signal intensity of the ultrasonic wave signals, the distance between the transmitter 202 and the receivers 203, and the size of the transmitter 202 and the receivers 203 are set such that the reception signals are not influenced by multiple reflections from other objects.

The ultrasonic wave signals that pass through the hole or the like and are directly received have a large signal intensity, whereas the signal intensity of ultrasonic wave signals that have passed through the detected matter becomes weak. Thus, if the signal intensity of a received plurality of ultrasonic wave signals is larger than that of the other signals, then this means that it is an ultrasonic wave signal that has passed through a defective portion, such as a hole, and it can be detected that here is a defect in the detected matter. Moreover, the receivers 203 are assigned respective channel numbers, and it can be determined with which receiver 203 the signal has been received. Moreover, if the respective positions of the receivers 203 are known, then it is possible to judge at which position on the detected matter 210 there is a defect, since this corresponds to the position where the reception signal and the ultrasonic wave signal has passed through the detected matter.

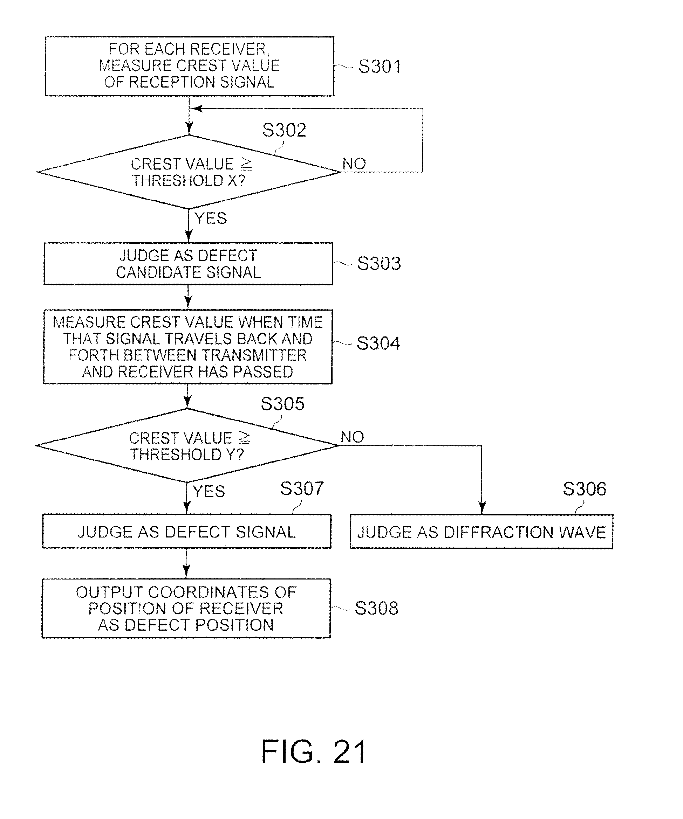

Referring to the flowchart in FIG. 21, the following is an explanation of a judging process of the ultrasonic wave detecting device according to this embodiment. In Step S301, the ultrasonic wave signals are emitted from the transmitter 202. After this, the ultrasonic wave signals are received with the receivers 203, and the detector 206 measures the crest values of the reception signals received via the amplifier 204 and the A/D converter 205. To measure the crest values, the crest values of the signals received by all receivers 203 of the receiving array 211 may be temporarily stored in a memory via an amplifier, and read out in parallel from this memory. In Step S302, the detector 206 detects for each reception signal whether the crest value of the reception signal is at least the threshold value. If there is at least one reception signal whose crest value is at least the threshold value, then the procedure advances to Step S303, and if there is not even one reception signal whose crest value is at least the threshold value, then the same detection process is repeated for the next sampled reception signals.

In Step S303, the defective part judging portion 207 judges that the reception signal whose crest value is at least the threshold value is a defect candidate signal. If the crest value is at least the threshold value, then there is a high possibility that this reception signal has not passed through the detected matter 210, but passed through a hole or the like and received directly, and therefore it seems that there is some defect at the position where the reception signal has passed through the detected matter 210. It should be noted that for the threshold value, it is possible to measure in advance the transmission waves that have passed through a detected matter with no defect, and to take an average value of the crest value of the reception signals received from these transmission waves as the threshold value. In Step S304, the detector 206 measures the crest signal of a multiply reflected reception signal when, starting at the time when the defect candidate signal has been received, a time period has passed that corresponds to the time in which the signal travels back and forth the distance between the transmitter 202 and the receivers 203.

In Step S305, the detector 206 detects, for each reception signal, at the receivers 203 that have received a defect candidate signal, whether there is a multiply reflected reception signal whose crest value is at least the threshold value. It should be noted that the period in which multiple reflections occur is constant, and occurs at an integer multiple of the time in which the ultrasonic wave signals travel back and forth the distance between the transmitter 202 and the receivers 203. Consequently, to detect a multiply reflected signal, there should be no limitation to reception signals that are reflected once, but the detection should be at a timing that is an integer multiple of the time it takes the ultrasonic wave signals to travel back and forth the distance between the transmitter 202 and the receivers 203, the timing being of a size where the crest values of the defect candidate signal can be distinguished from the crest values of reception signals that are not defect candidate signals. Moreover, the threshold value in Step S305 is set to a value that is smaller than the threshold value at Step S302. If the crest value of the multiply reflected reception signals is smaller than the threshold value, then the procedure advances to Step S306, and if the crest value of the multiply reflected reception signals is at least the threshold value, then the procedure advances to Step S307. At Step S306, the defective part judging portion 207 judges that the reception signal is a diffraction wave. At Step S307, the defective part judging portion 207 judges that the reception signal is a defect signal. At Step S308, the defective part judging portion 207 specifies the position of the receiver 203 that has received the defect signal. Thus, the position of the receiver 203 corresponds to the position of the defect in the detected matter 210, so that it is possible to judge the position and the size of the defect. It should be noted that the coordinates of the defect position may be output to the outside. This concludes the judging process of the ultrasonic wave detecting portion 200.

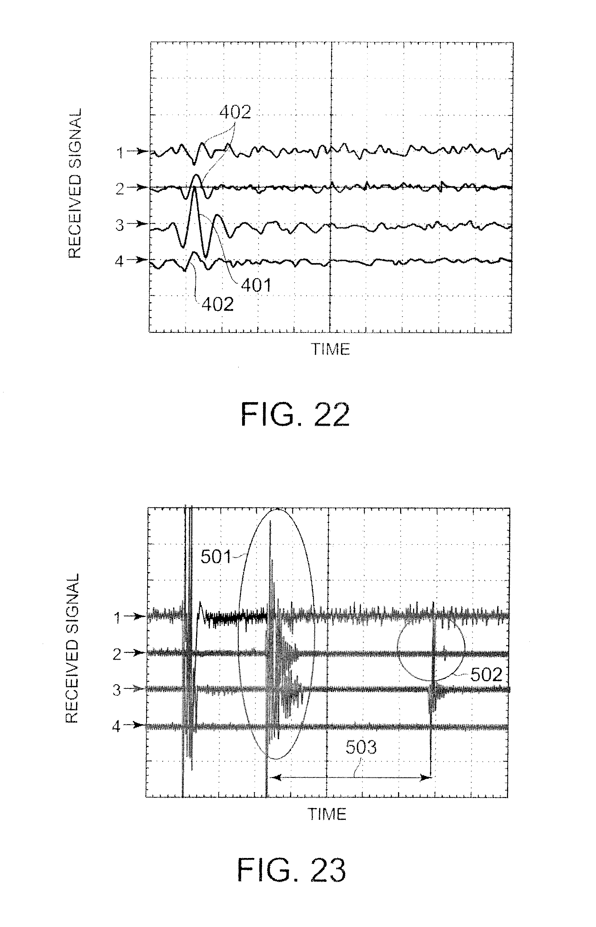

Referring to FIGS. 22 and 23, the following is an explanation of an example of a reception signal that is detected by the ultrasonic detecting device 200 of the present embodiment. Here, it is assumed that a defect occurs at the position where the ultrasonic wave signals received by the receivers 203 with the channel numbers "2" and "3" pass through the detected matter 210. As shown in FIG. 22, channel numbers are assigned to each of the receivers 203, and here, the reception signals received by four receivers 203 are shown. A large oscillation can be seen in the signal 401, and its crest value is high. Also in the reception signals 402 received by the receiver 203 with the channel numbers "1" and "4" next to the receivers 203 with the channel numbers "2" and "3", the crest value is higher than in an ordinary transmission wave. The reason for this is that the diffraction waves of the ultrasonic wave signals received by the receivers 203 with the channel numbers "2" and "3" are also received by the adjacent receivers 203. That is to say, due to the diffraction waves with high signal intensity, an ultrasonic wave signal that seems to have passed through a defective portion is received also at other receivers 203.

Here, FIG. 23 shows the case that a judging process is carried out including multiple signal reflections. First of all, for all of the receivers 203 there is a portion for which the crest value of the reception signal is high, but this is the detection of the signal when a voltage is applied in order to generate ultrasonic wave signal with the transmitter 202. After the applied voltage has been detected by all receivers 203, a high crest value 501 of the reception signal indicates that the receivers with the channel numbers "2" and "3" have received an ultrasonic wave signal with a high signal intensity that has passed through a defect portion of the detected matter 210, and the neighboring receivers 203 have received a diffraction wave of this ultrasonic wave signal. Furthermore, the crest value 502 indicates a multiply reflected ultrasonic wave signal, and corresponds to a reception signal that is received again by the receivers 203 after a time period 503 has passed in which the ultrasonic wave signal travels the distance between the transmitter 202 and the receivers 203 back and forth. Moreover, the diffraction waves in the case of a multiple reflection become so small that they do not affect the transmission waves. Thus, it is possible to distinguish the diffraction waves from the reception signals that have passed through the hole. That is to say, in the example of FIG. 23, it can be said that the reception signal whose crest value 502 is at least the threshold value is a defect signal that has passed through the defect portion of the detected matter, so that the defective part judging portion 207 can judge that there is a defect at the position where the reception signal received by the receivers 203 with the channel numbers "2" and "3" has passed through the detected matter.

With the ultrasonic wave detecting device of the above-described second embodiment, the presence of a defect in the detected matter can judged, and moreover the position and size of the defect can be judged with high precision by judging the state of the detected matter using multiply reflected reception signals with little influence of diffraction waves.

First Modification ofthe Second Embodiment

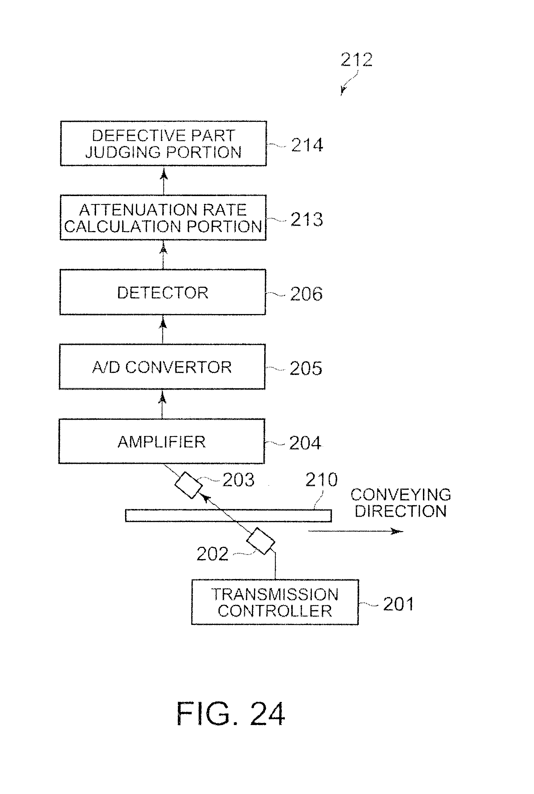

In the ultrasonic detecting device of the second embodiment, the defect signal is judged with the crest value of the multiply reflected reception signal, but this first modification differs in that the defect signal is judged by calculating the attenuation ratio of the envelope of the crest values of the reception signals. The reception signals that have passed directly through the hole are not influenced by the diffraction waves from other reception signals, so that for a short period of time, the attenuation ratio is constant, whereas in the other reception signals, it takes some time until the attenuation ratio becomes constant, due to the influence of the diffraction waves from the reception signals that have passed through the hole. Thus, the defective portion ofthe detected matter can be judged by measuring this time. An ultrasonic detecting device according to this first modification is explained with reference to the block diagram in FIG. 24. An ultrasonic detecting device 212 of this first modification includes a transmission controller 201, a transmitter 202, a receiver 203, an amplifier 204, an A/D converter 205, a detector 206, an attenuation rate calculation portion 213, and a defective part judging portion 214. It should be noted that the transmission controller 201, the transmitter 202, the receiver 203, the amplifier 204, the A/D converter 205, and the detector 206 operate in the same manner as those in the ultrasonic detecting device 200 according to the present embodiment, so that further explanations thereof have been omitted.

The attenuation rate calculation portion 213 receives defect candidate signals from the detector 206, calculates, for each defect candidate signal, an attenuation rate of the envelope of the crest values of the defect candidate signal, and measures an attenuation time until the attenuation rate of the envelope of the crest values reaches a predetermined attenuation rate. The defective part judging portion 214 receives the attenuation time from the attenuation rate calculation portion 213, and judges whether the attenuation time is within a threshold value. If the attenuation time is within the threshold value, then the signal is judged to be a defect signal, and the position where the defect signal has passed through the detected matter is judged to be the defect position.

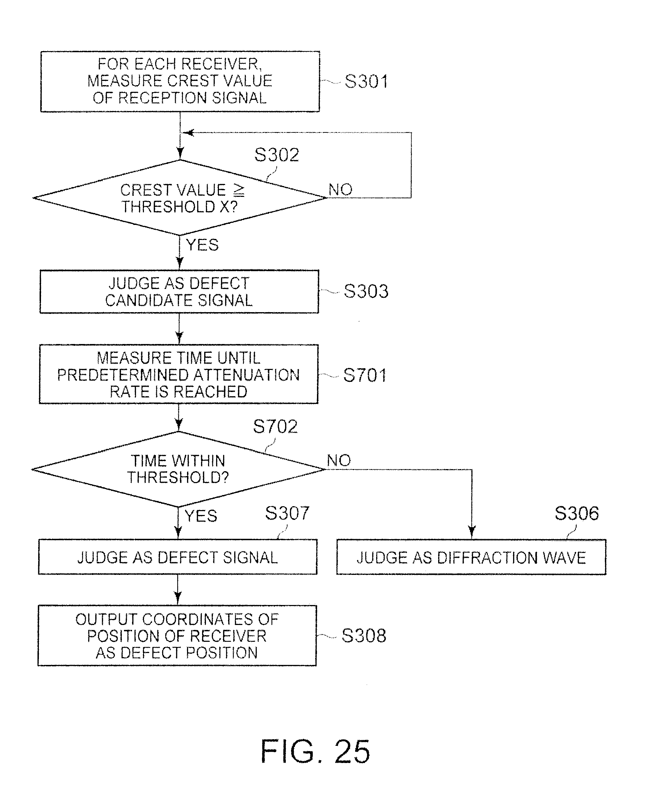

In the following, the operation of the ultrasonic detecting device 212 of this first modification is explained with reference to the flowchart in FIG. 25. It should be noted that the Steps S301 to S303 and the Steps S306 to S308 are the same as in the ultrasonic detecting device 200 according to the second embodiment shown in FIG. 21, so that further explanations thereof have been omitted. In Step S701, the attenuation rate calculation portion 213 calculates the attenuation rate of the envelope of the crest values in the defect candidate signal, and measures the attenuation time until a predetermined attenuation rate has been reached. In Step S702, the defective part judging portion 213 judges whether the attenuation time is within the threshold value. If the attenuation time is longer than the threshold value, then the procedure advances to Step S306, and the signal is judged to be a diffraction wave. If the attenuation time is within the threshold value, then the procedure advances to Step S307, and the signal is judged to be a defect signal.

With the ultrasonic detecting device 212 of the above-described first modification, defect signals are judged based on the attenuation rate of the envelope of the crest values in the defect candidate signals, so that as in the present embodiment, it is possible to judge the presence of defects, and furthermore to judge the position and size of the defects with high precision.

Second Modification of the Second Embodiment

The ultrasonic detecting device of the second modification example differs in that the defect signal is judged by comparing the frequency characteristics of the reception signals that have passed through the defect portion of the detected matter with the frequency characteristics of a reception signal that has passed through a portion other than the defect portion of the detected matter.

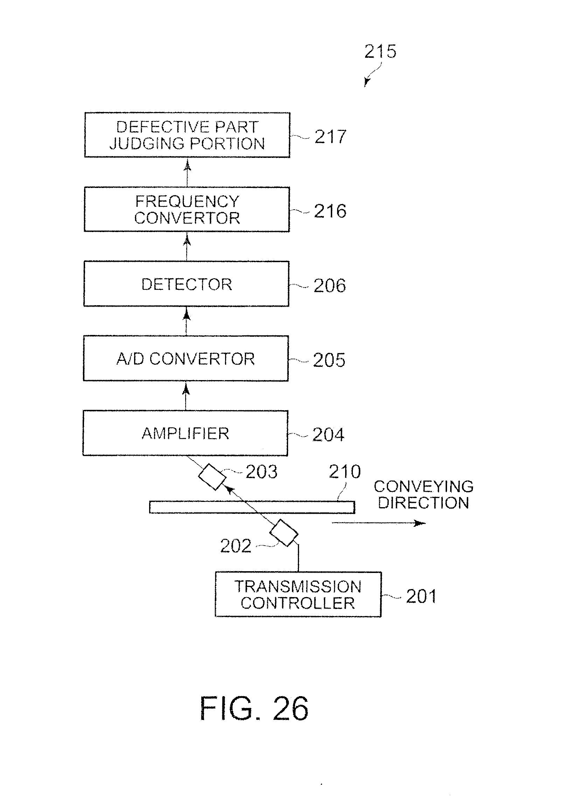

The ultrasonic detecting device according to this second modification is explained with reference to the block diagram in FIG. 26. The ultrasonic detecting device 215 according to the second modification includes a transmission controller 201, a transmitter 202, a receiver 203, an amplifier 204, an A/D converter 205, a detector 206, a frequency converter 216 and a defective part judging portion 217. It should be noted that the transmission controller 201, the transmitter 202, the receiver 203, the amplifier 204, the A/D converter 205, and the detector 206 operate in the same manner as those in the ultrasonic detecting device 200 according to the second embodiment, so that further explanations thereof have been omitted.

The frequency converter 216 receives the defect candidate signals from the detector 206 and calculates the frequency characteristics for each defect candidate signal. The frequency characteristics may be calculated by performing a Fast Fourier Transformation (FFT), for example. Moreover, the frequency characteristics of an ultrasonic wave signal not passing through the detected matter 210 are calculated as reference frequency characteristics. The defective part judging portion 217 receives the frequency characteristics and the reference frequency characteristics from the frequency converter 216, and judges whether the difference between the frequency characteristics and the reference frequency is within a threshold value. If the difference is within the threshold value, then the signal is judged to be a defect signal, and the position where the defect signal has passed through the detected matter is judged to be the defect position. It should be noted that the reference frequency characteristics may also be provided in the defect part judging portion 217 in advance.

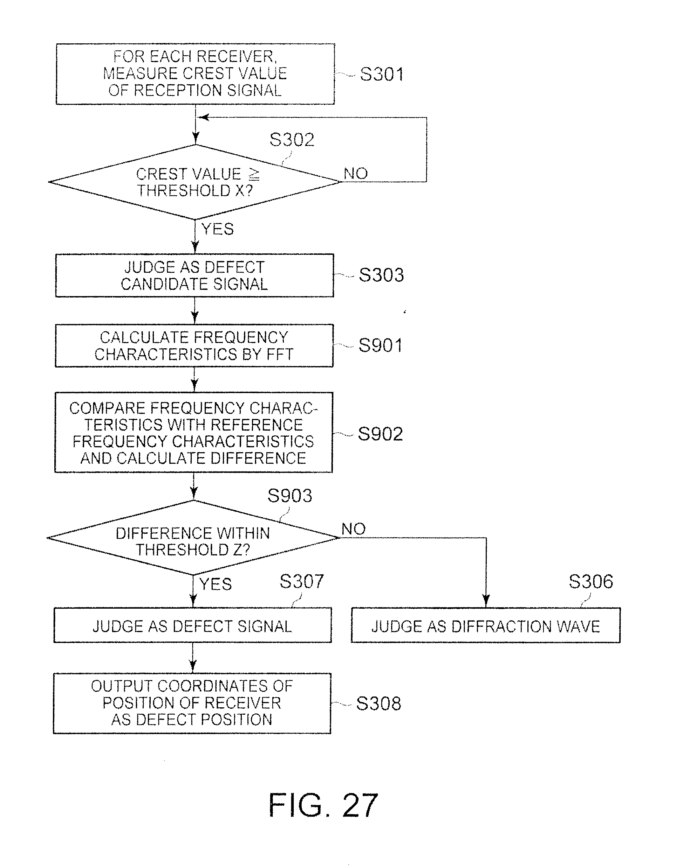

Referring to the flowchart in FIG. 27, the following is an explanation of the operation of the ultrasonic detecting device 215 according to the second modification. It should be noted that the Steps S301 to S303 and the Steps S306 to S308 are the same as in the ultrasonic detecting device 200 according to the embodiment shown in FIG. 21, so that further explanations thereof have been omitted. In Step S901, the frequency converter 216 subjects the defect candidate signals to FFT processing, and calculates the frequency characteristics as well as the reference frequency characteristics. In Step S902, the defective part judging portion 217 calculates the difference between the frequency characteristics and the reference frequency characteristics. In Step S903, the defective part judging portion 217 judges whether this difference is within the threshold value. If the difference is larger than the threshold value, then the procedure advances to Step S306, and the signal is judged to be a diffraction wave. If the difference is within the threshold value, then the reception signal appears to be received directly without passing through the detected matter 210, so that the procedure advances to Step S307, and the defect candidate signal is judged to be a defect signal.

With the ultrasonic detecting device of the second modification as shown above, the presence of a defect in the detected matter can judged, and moreover the position and size of the defect can be judged with high precision by making the judgment based on the frequency characteristics of the ultrasonic wave signals, as in the second embodiment.

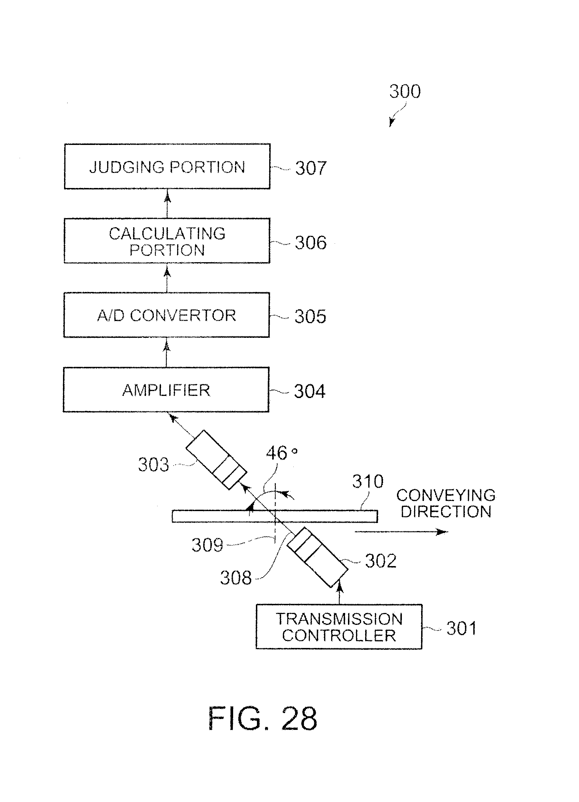

Referring to the block diagram in FIG. 28, the following is an explanation of an ultrasonic detecting device according to a third embodiment. The ultrasonic detecting device 300 includes a transmission controller 301, a transmitter 302, a receiver 303 of this third embodiment, an amplifier 304, an A/D converter 305, a calculating portion 306, and a judging portion 307. The transmission controller 301 generates a control signal that controls for example the transmission timing of an ultrasonic wave. The transmitter 302 receives the control signal from the transmission controller 301, generates ultrasonic waves and emits them towards a banknote 310 serving as the detected matter. To generate the ultrasonic waves, it is possible to use a piezoelectric transducer or an oscillation generator using an MEMS (Micro Electro Mechanical System) or the like. In the present embodiment, thickness oscillations of a 1-3-type piezocompound made of a piezoelectric body and a resin may be used as a piezoelectric transducer. By using thickness oscillations, it is possible to emit from the entire transmitter 302 an ultrasonic wave as a planar wave of the same phase onto the detected matter 310, so that the directionality of the ultrasonic waves becomes high. The emission intervals of the ultrasonic waves may be constant intervals, but the ultrasonic waves may also be emitted once every time the detected matter 310 is measured, as explained below.

The receiver 303 includes a plurality of receiver elements, which receive the ultrasonic waves, which have been emitted from the transmitter 302, and convert them into electric signals, thus obtaining reception signals. The ultrasonic waves received by the receiver 303 include transmission waves, which are ultrasonic waves that have passed through the detected matter 310, direct waves and diffraction waves, which have not passed through the detected matter 310, as well as superimposed waves of the same. For the receiver 303, it is possible to use a similar transducer as for the transmitter 302, or a displacement gauge using interference light measuring an oscillation as a displacement. The amplifier 304 may be for example an operation amplifier, which receives the reception signals from the receiver 303 and amplifies the respective reception signals. The A/D converter 305 receives the reception signals that have been amplified by the amplifier 304, and subjects each reception signal to an analog/digital conversion to generate digitized reception signals. The calculating portion 306 receives the reception signals that have been digitized by the A/D converter 305, and calculates the signal intensity of each of the digitized reception signals. It should be noted that the signal intensity of any of a current value, voltage value and power value may be measured.

The judging portion 307 receives the signal intensity of each reception signal from the calculating portion 306, and judges the state of the detected matter based on the signal intensity. For example, the judging portion 307 compares the received signal intensities with a predetermined value, and judges whether the received signal intensities are smaller than that predetermined value.

The detected matter 310 may be a sheet, such as a banknote or a card for example, and is conveyed in a constant direction by a conveying portion of conveying rollers, belts or the like, in a region between the transmitter 302 and the receiver 303, which are arranged opposing each other. Here, the inspection of the detected matter 310 is carried out with ultrasonic waves that are emitted while the detected matter 310 passes between the transmitter 302 and the receiver 303. Consequently, the distance between the transmitter 302 and the receiver 303 should be such a distance that the detected matter 310 can be inserted between the transmitter 302 and the receiver 303, and the receiver 303 can receive the transmission waves.

It is preferable that the transmitter 302 and the receiver 303 are tilted with respect to the plane in which the detected matter 310 is conveyed (referred to in the following as "conveying plane"), as shown in FIG. 28, rather than being arranged perpendicularly to the conveying plane. This way, the signal intensity of the reception signals at the receiver 303 can be increased.

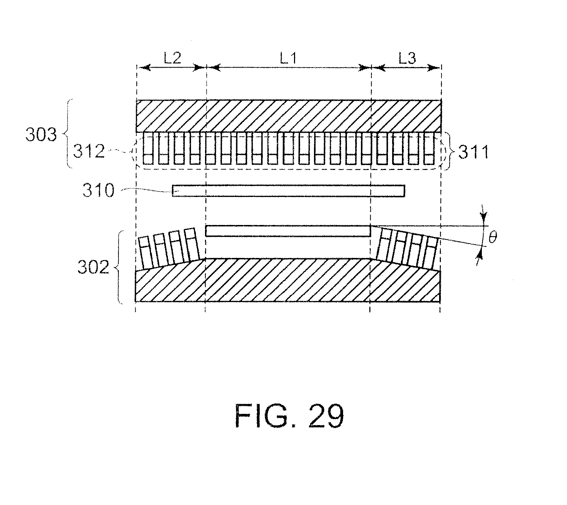

Referring to FIG. 29, which is a diagram taken from the conveying direction of the detected matter, the following is an explanation of an example of the arrangement of the transmitter 302 and the receiver 303 as well as the detected matter 310. As shown in FIG. 29, considering the positional displacement in the direction perpendicular to the conveying direction when the detected matter 310 is conveyed, the transmitter 302 and the receiver 303 according to the third embodiment are designed to have a length in the direction perpendicular to the conveying direction in the conveying plane of the detected matter 310 that is longer than the width of the detected matter 310. Moreover, a receiving array 312 in which a plurality of receiving elements 311 are arranged in a row is used as the receiver 303. By using such a receiving array 312, the individual receiving elements 311 can be regarded as the various receiving channels when the detected matter 310 is being judged, and based on the signal intensity of the individual regions of the detected matter 310 facing the receiving elements 311, it is possible to judge the state of the detected matter 310 in each region. For example, a reception signal with low signal intensity indicates that the amount of the ultrasonic wave absorbed by the detected matter 310 is high, so that it can be judged that the region of the detected matter 310 opposing the receiving element 311 with which this reception signal has been obtained is thick. By contrast, a reception signal whose signal intensity is high indicates that the amount of the ultrasonic wave signal absorbed by the detected matter 310 is low, so that it can be judged that the region of the detected matter 310 opposing this receiving element 311 is thin. Consequently, if the judging portion 307 judges that the intensity of the reception signal is lower than the predetermined value, then this means that the thickness of the detected matter 310 is higher than a thickness of a detected matter 310 corresponding to this predetermined value.

Here, the transmitter 302 according to the third embodiment is divided into three portions, namely, when viewed from the conveying direction of the detected matter, a portion L1 arranged in the middle in a direction perpendicular to the conveying direction of the detected matter 310, and portions L2 and L3 to the sides thereof. The portion L1 of the transmitter 302 is parallel to the receiving array 312 of the receiver 303 opposing it, and ultrasonic waves in a direction perpendicular to the receiver 303 are emitted from the portion L1 (also referred to as "first portion" below). The portions L2 and L3 are arranged on the two sides of the transmitter when viewing the transmitter 302 from the conveying direction, as shown in FIG. 29, and are tilted such that their distance to the receiver 303 becomes greater towards the edges. That is to say, L2 and L3 are arranged to be tilted by an angle $\theta$ (where $\theta$ is any positive number) with respect to L1. Consequently, even if the ultrasonic waves emitted from L2 and L3 are diffracted at the edges of the detected matter 310, the amount of ultrasonic waves that are bent around to reach the receiving elements 311 on the inner side is reduced.

L1 is arranged at a position that is always passed by the detected matter 310 and in opposition to the receiver 303, and is parallel to the receiving array 312 of the receiver 303. L2 and L3 are defined by the edges of the transmitter 302 and the positions furthest to the inside of the transmitter 302 where an edge of the detected matter 310 may pass through, when viewed from the conveying direction. This is because due to displacements when taking out the detected matter 310, the detected matter 310 does not necessarily pass always through the same position. In the example of FIG. 29, if the right edge of the detected matter 310 is shifted to the same position as the right edge of the transmitter 302 or the receiver 303, then the displacement of the detected matter 310 becomes maximal, and a portion with the length from the position where the left edge of the detected matter 310 passes through to the edge of the transmitter 302 serves as L2. Similarly, if the left edge of the detected matter 310 is shifted to the same position as the left edge of the transmitter 302 or the receiver 303, then a portion with the length from the position where the right edge of the detected matter 310 passes through to the edge of the transmitter 302 serves as L3.

In the third embodiment, L2 and L3 are arranged at an angle 0, such that from the middle of the transmitter 302 towards the edges ofthe transmitter 302, they recede from the plane opposing the receiver 303. By setting this angle θ receding from a plane opposing the receiver 303, it is possible to reduce the wrapping around of unnecessary diffraction waves without unduly affecting the transmission waves at the edges of the detected matter 310. It should be noted that it is preferable that the angle θ is about 1° ° or 2°, but it may be up to 5°.

In the example of FIG. 29, L2 and L3 have approximately the same length, but they may also have different lengths, and may be set as appropriate in view of the type and inspection environment of the detected matter 310. Moreover, in view of ease of manufacturing and costs, it is preferable that the portion L1 of the transmitter 302 is made of one element, but it may also be made of a plurality of elements, like the receiving array 312. Furthermore, also the portions L2 and L3 ofthe transmitter 302 may be made of one element each, but it is preferable if they are made of a plurality of elements, as shown in FIG. 29. By making the portions L2 and L3 of a plurality of elements, it is possible to stop the generation of ultrasonic waves from unnecessary elements when the size of the detected matter 310 is small, for example. Thus, it is possible to inspect detected matters of various sizes, while suppressing diffraction waves from the unnecessary elements.

Furthermore, in the example of FIG. 29, the two portions L2 and L3 at the two sides of the transmitter 302 are arranged at an angle, but if the configuration is such that one edge of the detected matter 310 definitely passes through one edge ofthe transmitter 302, then a configuration is also possible in which only one edge ofthe transmitter 302 is arranged at an angle.

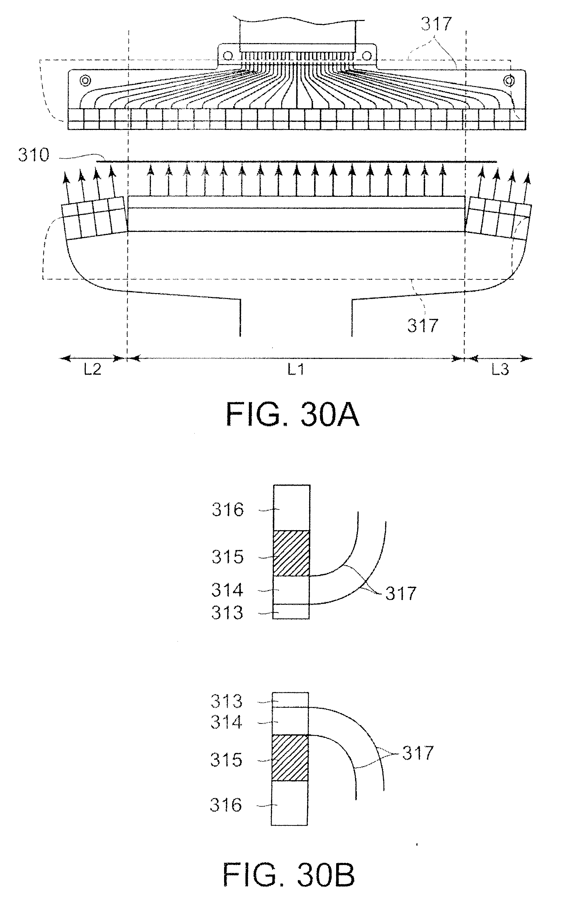

Referring to FIGS. 30A and 30B, the following is an explanation of an example of a specific method for manufacturing the transmitter 302. FIG. 30A is an overall diagram of the transmitter 302 and the receiver 303, and FIG. 30B is an enlarged view of one element each of the transmitter 302 and the receiver 303. As shown in FIG. 30B, the electrode surfaces of flexible print circuit boards (FPCs) 317 on which a wiring pattern for electric wiring has been formed, are bonded to the electrodes formed on the two main surfaces of a piezoelectric vibrator 314 with an electrically conductive adhesive or the like. An ultrasonic wave radiating surface is formed by layering an acoustic matching layer 313 on the FPCs 317. On the other hand, the FPCs 317 are respectively bonded to a backing material 315 on the side opposite to the ultrasonic wave radiating surface, and the backing material 315 is attached to a fixed base 316. It is preferable to use an epoxy or rubber-based resin, which generally have a large acoustic attenuation, for the backing material 315, and that the backing material 315 has some flexibility. Finally, the portions where the elements need to be partitioned are cut by a dicing saw or the like, thus separating the elements. In order to increase the mechanical strength, a resin may be filled into the cut grooves, but the transmitter may also be used without such filling. Ordinarily, the cuts will reach all the way to the backing material 315, so that the cut grooves separate the elements completely.

The tilt of the portions L2 and L3 on the two sides of the transmitter 302 can be imparted relatively easily by inserting a wedge-shaped resin piece with an angle θ into the cut grooves at both edges of L1. In order to impart the angle θ evenly to all elements of L2 and L3, it is preferable that a resin or the like with little deformation is filled in, in order to maintain the interval between the cut grooves of the elements L2 and L3 constant. Moreover, it is also possible to provide the bonding surface of the fixed base 316 and the backing material 315 in advance with a tilt of the angle θ. In this case, the element partitioning process is carried out without bonding the fixed base 316, and by ultimately pressure-bonding each backing material 315 to which an element is bonded to the fixed base 316, it is possible to deform the backing material 315 and form an angle θ.

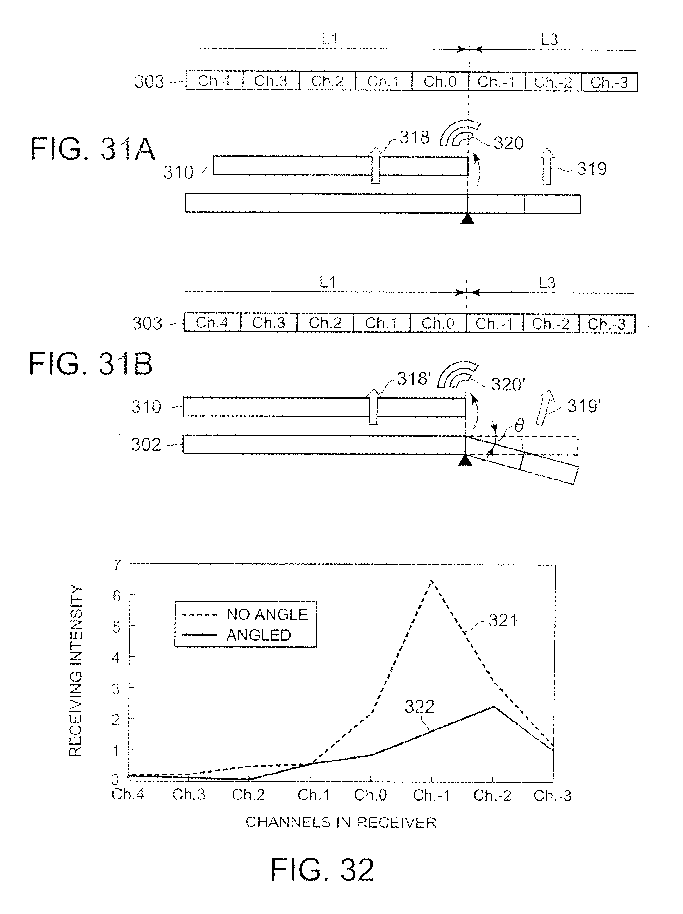

Referring to the FIGS. 31A, 31B and 32, the following is an explanation of differences in the reception state of the ultrasonic waves at the receiver 303, depending on the presence of an angle at L2 and L3 on both sides ofthe transmitter 302. FIGS. 31A and 31B show an example of the positional relation between the transmitter 302, the receiver 303 and the detected matter 310. The channels "Ch" in the receiver 303 correspond to the respective receiving elements 311. FIG. 31A shows, as a comparative example, the state of the ultrasonic waves if the two sides (L2 and L3) of the transmitter 302 lie in the same plane as L1, that is, if no angle θ is provided. FIG. 31B illustrates the case that in the ultrasonic detecting device 300 according to the third embodiment, both sides ofthe transmitter 302 are provided with an angle. In FIG. 31A, the ultrasonic waves received by the receiver 303 may be any of a transmission wave 318, a direct wave 319 and a diffraction wave 320. In this situation, the receiving element 311 at the position of "Ch. -1" is strongly affected by the diffraction wave 320, and its received signal intensity is high.

On the other hand, also in FIG. 31B, as in FIG. 31A, a diffraction wave 320' is generated at for example the "Ch.-1" due to the edge of the detected matter 310. However, since the angle θ is provided, the ultrasonic waves from the elements emitting the unnecessary direct wave 319' or the diffraction wave 320' are received less by the receiver 303. Thus, other than the transmission wave 318', the influence of the unnecessary direct wave 319' or the diffraction wave 320' becomes small. Consequently, it is possible to judge the state of the detected matter 310 more precisely with the receivers 303.

Referring to FIG. 32, the following is an explanation of the results of a measurement of the reception intensity near the edges of the detected matter in the configuration of FIGS. 31A and 31B. The horizontal axis in FIG. 32 denotes the position of the receiving elements 311 of the receiver 303, and corresponds to the channels "Ch" in FIGS. 31A and 31B noted above. The vertical axis marks the signal intensity of the reception signals. The dotted line 321 denotes the case of FIG. 31A, and the solid line 322 denotes the case of FIG. 31B. Here, the angle θ is set to about 1°, the emission direction ofthe ultrasonic waves from the first portion L1 of the transmitter 302 and the direction (308 in FIG. 28) perpendicular to the receiving plane of the receiver 303 are tilted by about 46° from the direction (309 in FIG. 28) perpendicular to the conveying path of the detected matter 310.

As indicated by the dotted line 321, when the surface of the transmitter 302 opposing the receiver 303 is a plan surface, then the reception intensity of "Ch. -1" becomes abruptly high, and it can be seen that it is affected by the diffraction waves 320.

On the other hand, the solid line 322 shows that the signal intensity of the signals received by "Ch. 0" and "Ch. -1" becomes lower than the dotted line 321, and are less affected by the diffraction waves 320.

The ultrasonic detecting device 300 may further be provided with a memory storing the predetermined value used for the judgment by the judging portion 307. The downstream conveying direction of the conveying means may also be branched into two paths. Moreover, the ultrasonic detecting device 300 may further include a classification means with which the detected matter 310 judged by the judging portion 307 to have a thick portion can be conveyed into one branched path, and the other detected matters 310 can be conveyed in the other path.

With the above-described third embodiment, it is possible to reduce the influence of diffraction waves at the edge of the detected matter, and to judge the state of the detected matter with higher precision by providing the transmitter with a portion emitting ultrasonic waves near the edge of the detected matter with an angle, such that this portion recedes from the plane opposing the receiver.

It should be noted that the functions explained in the foregoing embodiments are not limited to hardware configurations and may also be realized using software, by executing with a computer a program representing these functions. It is also possible to realize these functions by selecting software or hardware as appropriate.

While certain embodiments have been described, these embodiments have been presented by way of example only, and are not intended to limit the scope of the inventions. Indeed, the novel methods and systems described herein may be embodied in a variety of the other forms; furthermore, various omissions, substitutions and changes in the form the methods and systems described herein may be made without departing from the spirit of the inventions. The accompanying claims and their equivalents are intended to cover such forms or modifications as would fall within the scope and spirit of the inventions.

Means for solving the problem of the present embodiments are disclosed as follows:

[1] An ultrasonic detecting device, comprising:

a transmitter to generate ultrasonic waves and emit an ultrasonic wave signal;
at least one receiver to receive the ultrasonic wave signal after it has passed though a detected matter, and to obtain respective first reception signals; and
a detector to measure a first crest value of the first reception signal of each receiver, and to detect whether there is a first reception signal whose first crest value is at least a first threshold value; and
a judging portion that, if there is a first reception signal whose first crest value is at least the first threshold value, judges that first reception signal to be a defect candidate signal that may have passed through a defect portion of the detected matter;
wherein, if there is a defect candidate signal, the detector measures a second crest value of a second reception signal that the receiver that has received that defect candidate signal has received when a time period has passed that is an integer multiple of a predetermined time period after the time when the defect candidate signal has been received, and detects whether there is a second reception signal whose second crest value is at least a second threshold value;
wherein the judging portion judges the defect candidate signal to be a defect signal that has passed through a defect portion of the detected matter, if there is a second reception signal whose second crest value is at least the second threshold value.

[2] The ultrasonic detecting device of [1], wherein the predetermined time period is a time period in which the ultrasonic wave signal travels back and forth the distance between the transmitter and the receiver.

[3] The ultrasonic detecting device of [1], wherein the judging portion judges that there is a defect at the position where the defect signal has passed through the detected matter.

[4] The ultrasonic detecting device of [1], wherein the transmitter and the receiver are arranged at such a spacing that the detected matter can be inserted between the transmitter and the receiver, and the receiver is arranged opposite the transmitter at a position where reflection waves of the reception signal reflected by the transmitter can be received.

[5] An ultrasonic detecting device, comprising:

a transmitter to generate ultrasonic waves and transmit ultrasonic wave signals;

at least one receiver to respectively obtain a first reception signal by receiving the ultrasonic wave signals that have passed through a detected matter;

a detector to measure a crest value of the first reception signal of each receiver, and to detect whether there is a first reception signal whose crest signal is at least a first threshold value;

a judging portion to judge that the first reception signal is a defect candidate signal that may have passed through a defect portion of the detected matter, if there is a first reception signal whose crest value is at least a first threshold value; and

a calculating portion to calculate, for each defect candidate signal, an attenuation rate of an envelope of the crest values of the defect candidate signal, and measure an attenuation time until the attenuation rate reaches a predetermined attenuation rate;

wherein the judging portion judges that the defect candidate signal is a defect signal that has passed through a defect portion of the detected matter if the attenuation time is within a second threshold value.

[6] An ultrasonic detecting device, comprising:

a transmitter to generate ultrasonic waves and transmit ultrasonic wave signals;

at least one receiver to respectively obtain a first reception signal by receiving the ultrasonic wave signals that have passed through a detected matter;

a detector to measure a crest value of the first reception signal of each receiver, and detect whether there is a first reception signal whose crest value is at least a first threshold value;

a judging portion to judge that the first reception signal is a defect candidate signal that may have passed through a defect portion of the detected matter, if there is a first reception signal whose crest value is at least a first threshold value; and

a calculating portion to calculate, for each defect candidate signal, first characteristics indicative of frequency characteristics of the defect candidate signal and second characteristics indicative of frequency characteristics before passing through the detected matter;

wherein the judging portion judges that the defect candidate signal is a defect signal that has passed through a defect portion of the detected matter, if the difference between the first characteristics and the second characteristics is within a second threshold.

[7] An ultrasonic detecting method, comprising:

generating ultrasonic waves and transmitting ultrasonic wave signals;

respectively obtaining, with at least one receiver, a first reception signal by receiving the ultrasonic wave signals that have passed through a detected matter;

measuring a first crest value of the first reception signal of each receiver, and detecting whether there is a first reception signal whose first crest signal is at least a first threshold value;

judging that the first reception signal is a defect candidate signal that may have passed through a defect portion of the detected matter, if there is a first reception signal whose first crest value is at least a first threshold value; and

if there is a defect candidate signal, measuring a second crest value of a second reception signal that the receiver that has received that defect candidate signal has received when a time period has passed that is an integer multiple of at least 1 of a predetermined time period after the time when the defect candidate signal has been received, and detecting whether there is a second reception signal whose second crest value is at least a second threshold value; and

judging the defect candidate signal to be a defect signal that has passed through a defect portion of the detected matter, if there is a second reception signal whose second crest value is at least the second threshold value.

[8] An ultrasonic detecting method, comprising:

generating ultrasonic waves and transmitting ultrasonic wave signals;

respectively obtaining, with at least one receiver, a first reception signal by receiving the ultrasonic wave signals that have passed through a detected matter;

measuring a crest value of the first reception signal of each receiver, and detecting whether there is a first reception signal whose crest signal is at least a first threshold value;

judging that the first reception signal is a defect candidate signal the may have passed through a defect portion of the detected matter, if there is a first reception signal whose crest value is at least a first threshold value; and

calculating, for each defect candidate signal, an attenuation rate of an envelope of the crest values of the defect candidate signal, and measuring an attenuation time until the attenuation rate reaches a predetermined attenuation rate; and

judging that the defect candidate signal is a defect signal that has passed through a defect portion of the detected matter if the attenuation time is within a second threshold value.

[9] An ultrasonic detecting method, comprising:

generating ultrasonic waves and transmitting ultrasonic wave signals;

respectively obtaining, with at least one receiver, a first reception signal by receiving the ultrasonic wave signals that have passed through a detected matter;

measuring a crest value of the first reception signal of each receiver, and detecting whether the crest signal is a first reception signal of at least a first threshold value;

judging that the first reception signal is a defect candidate signal that may have passed through a defect portion of the detected matter, if the crest value of the first reception signal has at least a first threshold value; and

calculating, for each defect candidate signal, first characteristic indicative of frequency characteristics of the defect candidate signal and second characteristics indicative of frequency characteristics before passing through the detected matter; and

judging that the defect candidate signal is a defect signal that has passed through a defect portion of the detected matter, if the difference between the first characteristics and the second characteristics is within a second threshold.

[10] An ultrasonic detecting device, comprising:

a transmitter to emit ultrasonic waves toward a conveyed detected matter;

a receiver that is arranged opposite the transmitter, a conveying path of the detected matter being arranged between the receiver and the transmitter, the receiver comprising a plurality of elements, each element obtaining a reception signal by receiving the ultrasonic waves;

a calculating portion to calculate an intensity of the reception signal for each element of the receiver; and

a judging portion to judge whether the intensity is smaller than a predetermined value;

wherein the transmitter comprises a first portion that is arranged in a middle portion in a direction perpendicular to the conveying direction of the detected matter and that is formed to be parallel to a plane opposing the receiver, and a second portion that is arranged along at least one edge in the direction perpendicular to the conveying direction of the detected matter, and that is formed obliquely in a direction such that its distance from the receiver increases with decreasing distance from the edge.

[11] The ultrasonic detecting device according to [10], wherein the transmitter is formed such that the second portion is oblique from the middle of the transmitter to one edge of the transmitter.

[12] The ultrasonic detecting device according to [10] or [11], wherein the transmitter has said second portion on both sides of the transmitter.

[13] The ultrasonic detecting device according to [11] or [12], wherein the transmitter is arranged such that the angle between the second portion and the first portion is not greater than 5 degrees.

[14] The ultrasonic detecting device according to any of [10] to [13], wherein in the transmitter, the second portion is formed by a plurality of elements.

[15] The ultrasonic detecting device according to any of [10] to [14], wherein the emission direction of the ultrasonic waves from the first portion of the transmitter and the direction vertical to the receiving surface of the receiver are oblique with respect to a direction perpendicular to the plane of the conveying path.

[16] The ultrasonic detecting device according to any of [10] to [15], wherein the transmitter and the receiver comprise a backing material, a piezoelectric vibrator, and an acoustic matching layer, wherein a print circuit board is inserted respectively between the backing material and the piezoelectric vibrator, as well as between the piezoelectric vibrator and the acoustic matching layer.

**Claims**

1. An ultrasonic detecting device, comprising:

a transmitter (50) arranged at a predetermined angle ($\theta$) with respect to a conveying plane (P) on which a sheet (7) is conveyed, the transmitter (50) emitting ultrasonic waves towards the conveying plane (P);

a receiver (60) provided with a plurality of channels (60a - 60h) to detect the ultrasonic waves, the receiver (60) detecting the ultrasonic waves incident on the channels; and

a dividing member (70) to shield the receiver (60) from diffraction waves of the ultrasonic waves emitted from the transmitter (50), the diffraction waves being diffracted at an edge of the sheet (7) that delimits the sheet (7) in a direction perpendicular to a conveying direction of the sheet (7).

2. The device according to claim 1, wherein the dividing member (70) comprises a plurality of divider plates (72) having a surface that is parallel to a plane including a conveying direction (a) of the sheet (7) and a direction (c) perpendicular to the conveying plane (P).

3. The device according to claim 1 or 2, wherein the dividing member (70) includes a plurality of ultrasonic wave paths formed by a plurality of divider plates (72) that are provided with a predetermined spacing in a scanning direction of the receiver, and the plurality of ultrasonic wave paths each define an incidence region (73) opposing the conveying plane and guide the ultrasonic waves incident on this incidence region (73) to the respective channel (60a - 60h) of the receiver (60).

4. The device according to claim 3, wherein the receiver (60) is arranged at the same angle ($\theta$) as the transmitter (50) with respect to the conveying plane (P) on which the sheet (7) is conveyed, and the incidence region (73) is arranged parallel to the conveying plane (P).

5. The device according to claim 3 or 4, wherein the plurality of ultrasonic wave paths of the dividing member (70) each define an exit region (74) from which the ultrasonic waves incident on the incident planes (73) exit, and the exit regions (74) are arranged to be parallel to the channels (60a - 60h) ofthe receiver (60).

6. The device according to claim 5, wherein the exit region (74) is arranged such that the divider plates (72) contact locations between the channels (60a - 60h) of the receiver (60).

7. The device according to any of claims 2 to 6, wherein the divider plates (72) are fitted into grooves formed between the channels (60a - 60h) of the receiver (60).

8. The device according to any of claims 1 to 7, further comprising:

   a timing controller (81) that controls a timing at which the ultrasonic waves are detected by the channels (60a - 60h) of the receiver (60), taking a predetermined time after transmission waves that have been emitted from the transmitter (50) and passed through the sheet (7) have reached the channels (60a - 60h) of the receiver (60) as the detection timing.

9. A sheet processing apparatus, comprising:

   a conveying portion (115) to convey a sheet (7);
   the device according to any of claims 1 to 8;
   a judging portion (155) to perform a judgment on the sheet (7), based on a detection result of the receiver (60); and
   a classification processing portion to classify the sheet (7) based on a judgment result from the judging portion (155).

**FIG. 1**

**FIG. 2**

100

SHEET HANDLING APPARATUS

137 — OPERATION / DISPLAY PORTION          KEYBOARD — 140

MAIN CONTROLLER          MEMORY ~151a ~151

116

155          INSPECTION PORTION

| CPU | IMAGE READER | ~117 |
| | IMAGE READER | ~118 |
| | THICKNESS INSPECTION PORTION | ~119 |
| | ULTRASONIC DETECTING DEVICE | ~135 |
| | SENSORS | ~154 |

CONVEYOR CONTROLLER

STACK / BAND CONTROLLER

CUTTER CONTROLLER

152          153          156

FIG. 3

FIG. 4

FIG. 5

71

70

72

72

72

c

b ← → a

FIG. 6

VIBRATING
SURFACE
70

60a

60b

60c

60d

60e

60f

60g

60h

60

72

71

c

b ← → a

FIG. 7

FIG. 8

FIG. 9

70

71

c

b

72 72

d

7

P

PREDETERMINED
INTERVAL

# FIG. 10

60

60a 60b 60c 60d 60e 60f 60g 60h

c

b

72 72

# FIG. 11

60a  60b  65

~ 61

~ 62

~ 63

# FIG. 12

72  72

60a  60b  60c  60d  60e  60f  60g  60h

~ 61

~ 62

~ 63

# FIG. 13

FIG. 14

FIG. 15

FIG. 16

FIG. 17

FIG. 18

| DEFECTIVE PART JUDGING PORTION | 207 |
| DETECTOR | 206 |
| A/D CONVERTOR | 205 |
| AMPLIFIER | 204 |

FIG. 19

FIG. 20

```
┌─────────────────────────────┐
│     FOR EACH RECEIVER,       │
│    MEASURE CREST VALUE       │─── S301
│    OF RECEPTION SIGNAL       │
└─────────────────────────────┘
              │
              ▼            S302
          ╱───────────╲
         ╱  CREST VALUE ≧ ╲      NO
        ╱   THRESHOLD X?   ╲───────────┐
         ╲               ╱             │
          ╲─────────────╱              │
              │                        │
              │ YES                    │
              ▼                        │
┌─────────────────────────────┐        │
│      JUDGE AS DEFECT         │─── S303│
│      CANDIDATE SIGNAL        │        │
└─────────────────────────────┘        │
              │                        │
              ▼                        │
┌─────────────────────────────┐        │
│ MEASURE CREST VALUE WHEN TIME│        │
│ THAT SIGNAL TRAVELS BACK AND │─── S304│
│ FORTH BETWEEN TRANSMITTER    │        │
│ AND RECEIVER HAS PASSED      │        │
└─────────────────────────────┘        │
              │          S305          │
              ▼                        │
          ╱───────────╲                │
         ╱ CREST VALUE ≧ ╲     NO       │
        ╱  THRESHOLD Y?   ╲─────────┐   │
         ╲               ╱          │   │
          ╲─────────────╱           │   │
              │ YES   S307          │ S306
              ▼                     ▼
┌─────────────────────┐   ┌──────────────────────────┐
│ JUDGE AS DEFECT SIGNAL│  │ JUDGE AS DIFFRACTION WAVE │
└─────────────────────┘   └──────────────────────────┘
              │
              ▼
┌─────────────────────────────┐
│    OUTPUT COORDINATES OF     │
│    POSITION OF RECEIVER      │─── S308
│    AS DEFECT POSITION        │
└─────────────────────────────┘
```

FIG. 21

FIG. 22

FIG. 23

212

DEFECTIVE PART
JUDGING PORTION — 214

ATTENUATION RATE
CALCULATION PORTION — 213

DETECTOR — 206

A/D CONVERTOR — 205

AMPLIFIER — 204

203

210

CONVEYING
DIRECTION

202

TRANSMISSION
CONTROLLER — 201

FIG. 24

34

```
                 FOR EACH RECEIVER,
                 MEASURE CREST VALUE        ~ S301
                 OF RECEPTION SIGNAL

                              |
                              v           S302
                        CREST VALUE ≧              NO
                        THRESHOLD X?

                              | YES

                  JUDGE AS DEFECT             ~ S303
                  CANDIDATE SIGNAL

                              |
                              v
                 MEASURE TIME UNTIL
            PREDETERMINED ATTENUATION        ~ S701
                 RATE IS REACHED

                              |
                              v         S702
                        TIME WITHIN            NO
                        THRESHOLD?

                 | YES    S307                      S306

            JUDGE AS DEFECT SIGNAL        JUDGE AS DIFFRACTION WAVE

                       |
                       v
            OUTPUT COORDINATES OF
            POSITION OF RECEIVER          ~ S308
              AS DEFECT POSITION
```

# FIG. 25

215

| DEFECTIVE PART JUDGING PORTION | 217 |

↑

| FREQUENCY CONVERTOR | 216 |

↑

| DETECTOR | 206 |

↑

| A/D CONVERTOR | 205 |

↑

| AMPLIFIER | 204 |

203

210

CONVEYING DIRECTION

→

202

| TRANSMISSION CONTROLLER | 201 |

FIG. 26

FOR EACH RECEIVER, MEASURE CREST VALUE OF RECEPTION SIGNAL — S301

S302
CREST VALUE ≧ THRESHOLD X? — NO

YES

JUDGE AS DEFECT CANDIDATE SIGNAL — S303

CALCULATE FREQUENCY CHARACTERISTICS BY FFT — S901

COMPARE FREQUENCY CHARACTERISTICS WITH REFERENCE FREQUENCY CHARACTERISTICS AND CALCULATE DIFFERENCE — S902

S903
DIFFERENCE WITHIN THRESHOLD Z? — NO

YES  S307

JUDGE AS DEFECT SIGNAL

S306
JUDGE AS DIFFRACTION WAVE

OUTPUT COORDINATES OF POSITION OF RECEIVER AS DEFECT POSITION — S308

FIG. 27

300

JUDGING PORTION — 307

CALCULATING PORTION — 306

A/D CONVERTOR — 305

AMPLIFIER — 304

303

46°

310    CONVEYING DIRECTION

309

308

302

TRANSMISSION CONTROLLER — 301

FIG. 28

FIG. 29

317

310

317

L2        L1        L3

## FIG. 30A

316
315
314
313
317

313
314
315
316
317

## FIG. 30B

FIG. 31A

FIG. 31B

FIG. 32

Europäisches
Patentamt

European
Patent Office

Office européen
des brevets

# EUROPEAN SEARCH REPORT

**Application Number**

EP 11 17 7748

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 10 2007 008401 A1 (LEUZE ELECTRONIC GMBH & CO KG [DE]) 28 August 2008 (2008-08-28) * paragraph [0026] - paragraph [0033] * * figure 1 * | 1 | INV. G01B17/00 G01N29/22 G07D7/08 |
| A | US 5 488 867 A (DORR JOHN A [US]) 6 February 1996 (1996-02-06) * column 1, line 34 - line 43 * * column 2, line 18 - line 33 * * column 3, line 1 - line 45 * * figures 1-3 * | 1 | |
| A | US 2004/025576 A1 (GLAUSER ANTONY ROBERT [GB] ET AL) 12 February 2004 (2004-02-12) * paragraph [0010] - paragraph [0021] * * paragraph [0120] * * paragraph [0125] - paragraph [0128] * * figures 1,5 * | 1 | |
| A | US 2010/060881 A1 (KAYANI SOHAIL [US]) 11 March 2010 (2010-03-11) * paragraph [0027] - paragraph [0030] * * figures 1,2b * | 1 | TECHNICAL FIELDS SEARCHED (IPC) G07D G01B G01N |

The present search report has been drawn up for all claims

| Place of search | Date of completion of the search | Examiner |
|---|---|---|
| Munich | 17 November 2011 | Paraf, Edouard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 17 7748

This annex lists the patent family members relating to the patent documents cited in the above-mentioned European search report.
The members are as contained in the European Patent Office EDP file on
The European Patent Office is in no way liable for these particulars which are merely given for the purpose of information.

17-11-2011

| Patent document cited in search report | Publication date | Patent family member(s) | Publication date |
|---|---|---|---|
| DE 102007008401 A1 | 28-08-2008 | NONE | |
| US 5488867 A | 06-02-1996 | AU 2094095 A | 02-10-1996 |
| | | US 5488867 A | 06-02-1996 |
| | | WO 9628708 A1 | 19-09-1996 |
| US 2004025576 A1 | 12-02-2004 | AU 1070402 A | 06-05-2002 |
| | | CA 2426732 A1 | 02-05-2002 |
| | | EP 1328802 A1 | 23-07-2003 |
| | | JP 2004512528 A | 22-04-2004 |
| | | US 2004025576 A1 | 12-02-2004 |
| | | WO 0235225 A1 | 02-05-2002 |
| US 2010060881 A1 | 11-03-2010 | AU 2009291651 A1 | 18-03-2010 |
| | | EP 2342696 A2 | 13-07-2011 |
| | | US 2010060881 A1 | 11-03-2010 |
| | | WO 2010030910 A2 | 18-03-2010 |

EPO FORM P0459

For more details about this annex : see Official Journal of the European Patent Office, No. 12/82